(19) Europäisches Patentamt
European Patent Office
Office européen des brevets

(11) Publication number: **0 541 146 B1**

(12) **EUROPEAN PATENT SPECIFICATION**

(45) Date of publication of patent specification: **19.07.95**

(51) Int. Cl.$^6$: **C09K 11/02**, G21K 4/00

(21) Application number: **92203225.5**

(22) Date of filing: **21.10.92**

(54) **Method of manufacturing a luminescent article.**

(30) Priority: **08.11.91 EP 91202904**

(43) Date of publication of application:
**12.05.93 Bulletin 93/19**

(45) Publication of the grant of the patent:
**19.07.95 Bulletin 95/29**

(84) Designated Contracting States:
**BE DE FR GB NL**

(56) References cited:
**EP-A- 0 128 384**
**EP-A- 0 133 689**
**EP-A- 0 173 352**

(73) Proprietor: **AGFA-GEVAERT naamloze vennootschap**
**Septestraat 27**
**B-2640 Mortsel (BE)**

(72) Inventor: **Timmerman, Daniel, c/o Agfa-Gevaert N.V.**
**DIE 3800,**
**Septestraat 27**
**B-2640 Mortsel (BE)**
Inventor: **Van Havenbergh, Jan, c/o Agfa-Gevaert N.V.**
**DIE 3800,**
**Septestraat 27**
**B-2640 Mortsel (BE)**
Inventor: **Blum, Harald, c/o Agfa-Gevaert N.V.**
**DIE 3800,**
**Septestraat 27**
**B-2640 Mortsel (BE)**

EP 0 541 146 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

1. Field of the invention.

The present invention relates to a luminescent article comprising a phosphor-containing element wherein phosphor particles are dispersed in a binder.

2. Background of the invention

In radiography the interior of objects is reproduced by means of penetrating radiation, which is high energy radiation belonging to the class of X-rays, gamma-rays and high-energy elementary particle radiation, e.g. beta-rays, electron beam or neutron radiation. For the conversion of penetrating radiation into visible light and/or ultraviolet radiation luminescent substances, called phosphors, are used.

In a conventional radiographic system an X-ray radiograph is obtained by X-rays transmitted imagewise through an object and converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

In practice the light emitted imagewise by said screen irradiates a contacting photographic silver halide emulsion layer film which after exposure is developed to form therein a silver image in conformity with the X-ray image.

For use in common medical radiography the X-ray film comprises a transparent film support double-side coated with a silver halide emulsion layer. During the X-ray irradiation said film is arranged in a cassette between two X-ray conversion screens each of them making contact with its corresponding silver halide emulsion layer.

Single-side coated silver halide emulsion films combined in contact with only one screen are often used in autoradiography and to improve image definition which is of great importance, e.g. in mammography and in particular fields of non-destructive testing (NDT) known as industrial radiography. An autoradiograph is a photographic record formed through the intermediary of penetrating radiation emitted by radioactive material contained in an object, e.g. microtome cut for biochemical research.

Phosphors suited for use in the conventional radiographic system must have a high prompt emission on X-ray irradiation and low afterglow in favour of image sharpness.

More recently an X-ray recording system has been developed wherein photostimulable storage phosphors are used having in addition to their immediate light emission (prompt emission) on X-ray irradiation the property to store temporarily a large part of the energy of the X-ray image which energy is set free by photostimulation in the form of light different in wavelength characteristic from the light used in the photostimulation. In said X-ray recording system the light emitted on photostimulation is detected photoelectronically and transformed into sequential electrical signals.

The basic constituents of such X-ray imaging system operating with storage phosphors are an imaging sensor containing said phosphor, normally a plate or panel, which temporarily stores the X-ray energy pattern, a scanning laser beam for photostimulation, a photoelectronic light detector providing analogue signals that are converted subsequently into digital time-series signals, normally a digital image processor which manipulates the image digitally, a signal recorder, e.g. magnetic disk or tape, and an image recorder for modulated light exposure of a photographic film or an electronic signal display unit, e.g. cathode-ray tube.

The terminology X-ray conversion screen as used herein refers to screens for use in conventional screen-film combinations or for use in stimulated luminescence radiography.

From the preceding description of said two X-ray recording systems operating with X-ray conversion phosphor screens in the form of a plate or panel it is clear that said plates or panels serve only as intermediate imaging elements and do not form the final record. The final image is made or reproduced on a separate recording medium or display. The phosphor plates or sheets can be used repeatedly. Before re-use of the photostimulable phosphor panels or sheets, a residual energy pattern is erased by flooding with light. The expected life of the plate is limited mainly by mechanical damage such as scratches.

Common X-ray conversion screens comprise in order : a support, a layer comprising phosphor particles dispersed in a suitable binder and a protective coating applied to the phosphor containing layer to protect said layer during use.

Since in the above-described X-ray recording systems the X-ray conversion screens are used repeatedly, it is important to provide them with an adequate topcoat for protecting the phosphor-containing

layer from mechanical and chemical damage. This is particularly important for photostimulable radiographic screens where each screen normally is not encased in a cassette but is used and handled as such.

A protective layer can be coated onto the phosphor-containing layer by directly applying thereto a coating solution containing a film-forming organic solvent-soluble polymer such as nitrocellulose, ethylcellulose or cellulose acetate or poly(meth)acrylic resin and removing the solvent by evaporation. According to another technique a clear, thin, tough, flexible, dimensionally stable polyamide film is bonded to the phosphor layer as described in published EP 00 392 474.

The use of a cross-linkable polymer mass in the production of a protective coating of a radiographic screen is described in US-P 4,205,116. Cross-linking is obtained by an acid-catalysed reaction of (1) a polymer or mixture of polymers containing reactive hydrogen atoms, e.g. a polyester compound comprising free hydroxyl groups, and (2) a crosslinking agent being an organic compound containing a plurality of etherified N-methylol groups.

According to a further known technique a protective overcoat is produced with a radiation-curable composition. Use of a radiation-curable coating as protective top layer in a X-ray conversion screen is described, e.g. in JP 86/176900 and US-P 4,893,021.

The application of a protective overcoat requires an additional step in the manufacture of the radiographic screens. If such could be avoided or if the protective coating could be formed simultaneously with the coating of the phosphor binder layer, a much more economic production of the radiographic screens would be possible.

The absence of a protective coating having a certain thickness is in favour of image-sharpness when using the radiographic screen in contact exposure of a photographic film.

It is desired for the binder of the phosphor particles of a radiographic screen to have a very high transparency to the light emitted by the screen and the optionally used stimulating light. The binder should not degrade or obtain a yellow stain by the chemically active ultraviolet radiation (actinic light) emitted by phosphors of the screen. Moreover, when the phosphor binder layer is not formed as a self-supporting element, the binder of the phosphor-binder layer should properly adhere to its substrate, e.g. subbed polyethyleneterephthalate support, even when bent. The phosphor-binder layer should not be brittle, so not readily craze and should be highly scratch-resistant, particularly when no protective coating is applied. The use of phosphor particles in a binder with a high index of refraction is in favour of image sharpness because that way the obliqueness of stray light is reduced.

For the preparation of highly abrasion-resistant and chemically resistant phosphor-binder layers the binder is cured. Curing of the binder may proceed photochemically by means of UV radiation or electron beam as described, e.g. in Research Disclosure December 1977, item 16435, or proceeds purely chemically as described, e.g. in US-P 4,508,636.

According to US-P 4,508,636 a radiation image storage panel comprising a substrate and a fluorescent layer is provided, said fluorescent layer consisting essentially of a binder comprising (a) a linear polyester resin cross-linked with a cross-linking agent, said polyester resin being obtained by a polycondensation reaction of a dihydroxy-compound with a dibasic acid or by polyaddition reaction of an oxyacid, and (b) nitrocellulose. The actually used cross-linking agent is a polyisocyanate, e.g. tolylene diisocyanate, which is highly toxic and therefore is to be avoided in the coating stage.

A problem encountered upon using most of the chemically cross-linkable polymers is the limited pot life of the binder composition as a consequence of premature curing, whereby the phosphor-binder dispersion becomes increasingly viscous and reproducible coating impossible.

By the use of radiation-curable phosphor-binder coatings the phosphor particles may absorb too much curing radiation and curing may proceed during the imagewise emission of light, e.g. U.V. radiation emitted by the phosphor, resulting in a gradual reduction of the flexibility of the phosphor layer.

## 3. Summary of the invention

It is an object of the present invention to provide a method of manufacturing a luminescent article comprising the step of forming a phosphor-binder layer from a phosphor-binder dispersion, wherein the binder is cured without need for radiation and without seriously toxic components, and wherein said curing results in a highly abrasion-resistant coating containing a binder which is optically clear and has a relatively high index of refraction. Thanks to the high abrasion resistance the phosphor-binder layer has not to be protected by an abrasion-resistant coating but may have such coating on top.

It is a further object of the present invention to provide a luminescent article, e.g. in the form of a plate, panel or web, comprising a phosphor-binder layer with high resistance to abrasion in which the binder has been cured, is optically clear, has a fairly high index of refraction, has high resistance to visible light and

ultraviolet (UV) radiation, and wherein the components that have been applied in the coating composition of the phosphor-binder layer need no special measures with regard to toxicity.

Other objects and advantages of the invention will become clear from the following description and examples.

The present invention provides a method of manufacturing a luminescent article comprising a supported or self-supporting phosphor-binder layer including a chemically cured binder, which method comprises the steps of (1) coating a dispersion of phosphor particles in a solution of uncured binder in a solvent or solvent mixture on a temporary or permanent support, (2) removing the solvent(s) by evaporation, and (3) curing said binder with the aid of moisture ($H_2O$), wherein the binder is formed essentially from a moisture-hardening binder composition prepared by mixing the following components (A) and (B) :

(A) 30 to 99 parts by weight of at least one copolymer of olefinically unsaturated compounds having a weight-average molecular weight [$\overline{M}w$] of at least 1500 and containing chemically incorporated moieties capable of undergoing an addition reaction with amino groups, and

(B) 1 to 70 parts by weight of organic substances containing blocked amino groups from which substances under the influence of moisture compounds having free primary and/or secondary amino groups are formed, and

wherein i) the copolymers of component (A) contain intramolecularly bound carboxylic anhydride moieties, with the anhydride equivalent weight of the copolymers being from 393 to 9,800 and ii) the binder composition contains from 0.25 to 10 anhydride moieties for each blocked amino group.

Further in accordance with the present invention a luminescent article is provided, which comprises a self-supporting or supported layer of phosphor particles dispersed in a cured resin binder, wherein said binder is a moisture-hardened binder composition obtained by allowing water to come into contact with a mixture essentially consisting of the above defined components (A) and (B).

4. Detailed description of the invention

According to an embodiment, the binder composition used according to the present invention is obtained by mixing :

(A) 50 to 97 parts by weight of (a) copolymer(s) of maleic anhydride with at least one other olefinically unsaturated monomer, said copolymer(s) containing addition polymerized maleic anhydride units and having a weight-average molecular weight ($\overline{M}w$) of 1,500 to 75,000, and

(B) 3 to 50 parts by weight of at least one organic substance containing blocked amino groups, said substance having a molecular weight of 86 to 10,000.

According to a preferred embodiment component (A) consists essentially of a copolymer of :

a) 3 to 25 parts by weight of maleic anhydride, and

b) 75 to 97 parts by weight of at least one copolymerisable monomer selected from the group corresponding to the following general formulae (I), (II) and (III) :

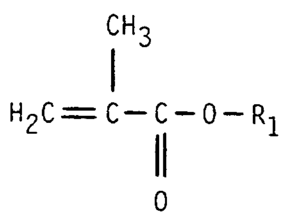

(I)

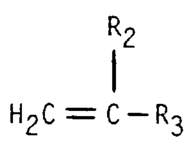

(II)

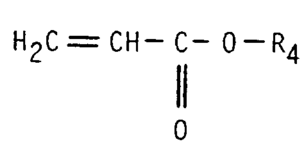

(III)

wherein :

each of $R_1$ and $R_4$ independently of each other represents an aliphatic or cycloaliphatic $C_1$ - $C_{18}$ hydrocarbon group in which one or more carbon atoms may be replaced by heteroatoms selected from the group consisting of oxygen, sulphur and nitrogen,

$R_2$ is hydrogen, methyl, ethyl, chlorine or fluorine, and

$R_3$ is a $C_2$ - $C_{15}$ aliphatic hydrocarbon group, a $C_5$ - $C_{10}$ cycloaliphatic hydrocarbon group, a $C_7$ - $C_{18}$ araliphatic hydrocarbon group, a $C_6$ - $C_{12}$ aromatic hydrocarbon group containing one or more heteroatoms selected from the group consisting of oxygen, sulphur and nitrogen in the form of ether, ester, amide, urethane, urea, thioester, oxirane, ketone, lactam or lactone group; and

wherein component (B) is a compound selected from the group consisting of an aldimine, ketimine, oxazolane, hexahydropyrimidine, tetrahydroimidazole, dihydroimidazole, tetrahydropyrimidine, amidacetal and amidaminal.

The binder product obtained in curing the above-defined binder composition with the aid of water (moisture) results from the hydrolysis of the blocked amine moieties of component (B), whereby one hydroxyl group is formed per amino group (primary or secondary amino group). These groups, especially said amino groups, enter into rapid cross-linking reaction with the anhydride groups of copolymer (A).

According to a particular embodiment the copolymer containing anhydride groups contains additionally epoxide groups as described in US-P 4,904,740, wherein the last mentioned groups also take part in a crosslinking reaction with free amino groups.

Preferred maleic anhydride copolymers (A) have a weight-average molecular weight [$\overline{M}w$] determined by gel chromatography of 3,000 to 50,000. Their anhydride equivalent weight (= quantity in gram containing 1 mole of anhydride groups) is from 3,800 to 393 and preferably from 2,000 to 450. They are produced in known manner by radically initiated copolymerisation, preferably in the presence of organic solvents. Suitable solvents for that purpose are given in US-P 4,975,493 which also mentions detailed preparation examples of such copolymers. Preferred maleic anhydride copolymers for use according to the present invention contain styrene, methacrylate and/or acrylate units.

The radical formers applied in the copolymerisation process are those suitable for reaction temperatures of 60 to 180 °C such as organic peroxides and other radical formers mentioned in US-P 4,975,493.

Preferably used blocked amines are oxazolanes, e.g. those described in said US-P 4,975,493. Blocked amines containing aldimine or ketimine groups for generating free amine with water are described in US-P 4,937,293. Blocked amines containing hexahydropyrimidine, tetrahydropyrimidine, or tetrahydroimidazole moieties for generating free amino groups are described in US-P 4,970,270. Blocked amines being amidacetal or amidaminal compounds are described in published European Patent Application 346669.

The blocked amines representing said component (B) have preferably a molecular weight of from 86 to 10,000, preferably from 250 to 4,000 and contain a statistical average of from 1 to 50, preferably 1 to 10, especially 2 to 4 structural units corresponding to at least one of the following general formulae (IV), (V), (VI), (VII), (VIII) and (IX):

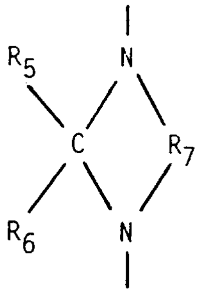
(IV)

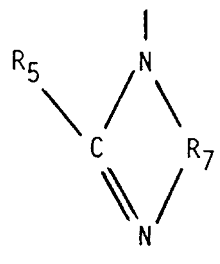
(V)

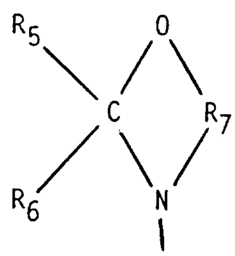
(VI)

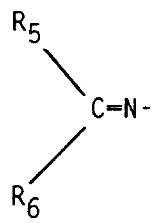
(VII)

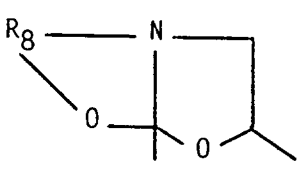
(VIII)

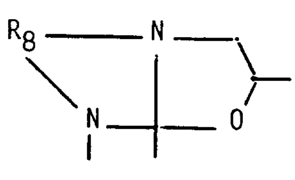
(IX)

wherein :

each of $R_5$ and $R_6$ independently of each other represents hydrogen, an aliphatic hydrocarbon group containing from 1 to 18 carbon atoms, a cycloaliphatic hydrocarbon group containing from 5 to 10 carbon atoms, an araliphatic hydrocarbon group containing from 7 to 18 carbon atoms or a phenyl group, or

$R_5$ and $R_6$ represent together the necessary atoms to form a five- or six-membered cycloaliphatic ring with the carbon atom whereto they are commonly linked,

$R_7$ represents a divalent aliphatic hydrocarbon group containing 2 to 6 carbon atoms, but having only a chain of 2 to 3 carbon atoms between the defined heteroatoms of the ring,
$R_8$ represents a divalent aliphatic hydrocarbon group having 2 to 10 carbon atoms, but having only 2 or 3 carbon atoms between the heteroatoms whereto said group is linked.

General formula (IV) includes 5-membered tetrahydro-imidazole and 6-membered hexahydropyrimidine structural units. General formula (V) includes 5-membered dihydro-imidazole and 6-membered tetrahydropyrimidine structural units. General formulae (VI), (VII), (VIII) and (IX) relate respectively to oxazolane (VI), aldimine and ketimine (VII), bicyclic amide acetal (VIII) and bicyclic amide aminal (IX) structural units.

Preparation examples of compounds including structural units within the scope of said general formulae are given in US-P 4,975,493 - 4,937,293 - 4,970,270 - and in published EP application 0 346 669.

Suitable aldehydes or ketones for reaction with polyamines to prepare said blocked amines containing hexahydropyrimidine, tetrahydropyrimidine or tetrahydroimidazole units as described above correspond to the following general formula :

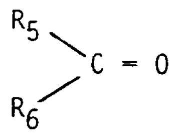

wherein $R_5$ and $R_6$ have the same meaning as described above, and preferably having a molecular weight of from 72 to 200 for the ketones, and from 58 to 250 for the aldehydes.

The following are examples of these compounds : methyl ethyl ketone, methyl propyl ketone, methyl isopropyl ketone, methyl-n-butyl ketone, methyl-n-amyl ketone, diethyl ketone, cyclohexanone, methyl-tert.-butyl ketone, 3,3,5-trimethyl-cyclohexanone, isobutyraldehyde, 2,2-dimethylpropanal, 2-ethylhexanal, hexanal, octanal, hexahydrobenzaldehyde.

The polyamines used for the preparation of the compounds containing hexahydropyridine or tetrahydroimidazole groups are in particular organic compounds containing at least 2 primary and/or secondary amino groups.

Suitable polyamines are, e.g. those corresponding to the following general formula :

$R_8$ - NH - $R_7$ - NH - $R_9$

in which
$R_7$ has the meaning indicated above, and
each of $R_8$ and $R_9$ (same or different) denote hydrogen, aliphatic hydrocarbon groups containing 1 to 10, preferably 1 to 4 carbon atoms, cycloaliphatic hydrocarbon groups containing 5 to 10, preferably 6 carbon atoms or aromatic hydrocarbon groups containing 7 to 15, preferably 7 carbon atoms, and the above-mentioned hydrocarbon groups, in particular the aliphatic hydrocarbon groups, may contain heteroatoms such as oxygen, nitrogen or sulphur in the form of ether, ester, amide, urethane, oxirane, ketone, lactam, urea, thioether, thioester or lactone groups, and may also contain reactive hydroxyl or amino groups.

Particularly preferred polyamines are those in which $R_8$ and $R_9$ (identical or different) stand for an alkyl group such as methyl, ethyl, n-propyl, isopropyl, n-butyl, isobutyl, tert.-butyl, n-pentyl or n-hexyl and at least one of the groups denoted by $R_8$ and $R_9$ is a group obtainable by the addition of an amine hydrogen atom to an olefinically unsatured compound. Examples of olefinically unsaturated compounds suitable for the preparation of such modified polyamines include derivatives of (methyl )acrylic acid such as the esters, amides or nitriles thereof or, e.g. aromatic vinyl compounds such as styrene, $\alpha$-methylstyrene or vinyl toluene or, e.g. vinyl esters such as vinyl acetate, vinyl propionate or vinyl butyrate or, for example, vinyl ethers such as ethyl vinyl ether, propyl vinyl ether, butyl vinyl ether or mono- or diesters for fumaric acid, maleic acid or tetrahydrophthalic acid.

$R_8$ and/or $R_9$ may also stand for an aminoalkyl or hydroxyalkyl group containing, e.g. 2 to 4 carbon atoms.

Ethylene diamine, 1,2-propylene diamine, 1,3-propylene diamine, 1,2- and 1,3-butylene diamine and diethylene triamine are particularly useful.

The preferred compounds containing aldimine or ketimine groups include compounds containing structural units of the following general formula ($R_5$ and $R_6$ having the meaning defined above) :

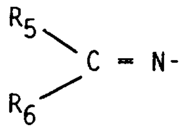

These compounds in principle may be prepared from the aldehydes or ketones already mentioned above as examples. Preferred aldehydes and ketones used for this purpose include isobutyraldehyde, 2,2-dimethylpropanal, 2-ethylhexanal, hexahydrobenzaldehyde and especially those ketones which have a boiling point below 170 °C and are readily volatile at room temperature, e.g. methyl isobutyl ketone, methyl isopropyl ketone, diethyl ketone, diisobutyl ketone and methyl tert.-butyl ketone.

The polyamines used for the preparation of component B) containing ketimine or aldimine groups may in particular be organic compounds containing at least 2 aliphatically and/or cycloaliphatically bound primary amino groups. Although polyamines containing aromatically bound amino groups may also be used, they are less preferred. The polyamines generally have a molecular weight of from 60 to 500, preferably from 88 to 400, although prepolymers with a relatively high molecular weight containing amino end groups may also be used as polyamine components for the preparation of component B).

Diprimary aliphatic and cycloaliphatic diamines are particularly preferred polyamines, e.g. tetramethylene diamine, hexamethylene diamine, isophorone diamine, bis(4-amino-cyclohexyl)-methane, bis-aminomethylhexahydro-4,7-methanoindane, 1,4-cyclohexanediamine, 1,3-cyclohexane diamine, 2-methylcyclohexane diamine, 4-methylcyclohexane diamine, 2,2,5-trimethylhexane diamine, 2,2,4-trimethylhexane diamine, 1,4-butane diol-bis(3-aminpropyl)-ether, 2,5-diamine-2,5-dimethylhexane, bis-aminomethyl-cyclohexane, bis(4-amino-3,5-dimethylcyclohexyl)-methane and mixtures thereof.

Tetramethylene diamine, hexamethylene diamine, isophorone diamine, bis-aminomethyl-cyclohexane, 1,4-cyclohexane diamine, bis-aminomethylhexahydro-4,7-methanoindane and bis(4-amino-cyclohexyl)-methane are particularly preferred.

The aldimines and ketimines may be prepared not only from these preferred diamines but also from prepolymers containing primary amino end groups, i.e. compounds in the molecular weight range of from 500 to 5,000, preferably from 500 to 2,000, containing at least two amino end groups. These groups include, e.g. the amino polyethers known from polyurethane chemistry, such as these described, e.g. in EP-A-0-081701 or, e.g. compounds containing amide, urea, urethane or secondary amino groups obtained as reaction products of difunctional or higher functional carboxylic acids, isocyanates or epoxides with diamines of the type exemplified above, which reaction products still contain at least two primary amino groups. Mixtures of such relatively high molecular weight polyamines with the low molecular weight polyamines exemplified above may also be used.

The aromatic polyamines which in principle may he used for the preparation of the aldimines or ketimines but are less preferred include, e.g. 2,4- and 2,6-diaminotoluene, 1,4-diaminobenzene and 4,4'-diaminodiphenylmethane.

The compound (B) containing bicyclic amide acetal groups can be obtained in a manner known per se by reaction of compounds containing epoxy or cyclic carbonate groups with cyclic amino esters such as, for example, oxazolines or oxazines. Preferably, the starting components in this reaction are used in such relative amounts that a total of 1.0 to 1.1 oxazoline or oxazine groups is present for every epoxy or cyclic carbonate group. This type of reactions, which lead to compounds having bicyclic amide acetal groups, are described in detail, e.g. in R.Feinauer, Liebigs Ann. Chem. 698, 174 (1966).

The oxazolines or oxazines which are used for the preparation of the bicyclic amide acetals can be prepared by methods known from the literature, e.g. by reaction of carboxylic acids or anhydrides thereof with hydroxyamines with the elimination of water or by reaction of nitriles with hydroxyamines with the elimination of ammonia. This type of reactions is described, e.g. in J. Org. Chem. 26, 3821 (1961), H.L. Wehrmeister, J. Org. Chem. 27, 4418 (1962) and P. Allen, J. Org. Chem. 28, 2759 (1963).

Oxazolines or oxazines which contain hydroxyl groups can also be converted into higher-functional oxazolines or oxazines, e.g. by reaction with organic polyisocyantes.

Bicyclic amide aminals which are suitable according to the invention as component B) can be obtained, e.g. by reaction of tetrahydropyrimidines or dihydroimidazoles with organic epoxides or cyclic carbonates.

In this reaction, monofunctional tetrahydropyrimidines or dihydroimidazoles can be reacted with monofunctional epoxides or carbonates, polyfunctional tetrahydropyrimidines or dihydroimidazoles with monofunctional epoxides or carbonates, monofunctional tetrahydropyrimidines or dihydroimidazoles with polyfunctional epoxides or carbonates.

The tetrahydropyrimidines or dihydroimidazoles used for the preparation of the bicyclic amide aminals can be prepared by methods known from the literature, e.g. by reaction of carboxylic acids with diamines with the elimination of water, or by reaction of nitriles with diamines with the elimination of ammonia. This type of reaction is described, e.g. in DE-OS (German Offenlegungsschrift) 3,640,239.

For the preparation of polymeric dihydroimidazole compounds reference is made to GB-P 1,221,131.

Compounds containing oxazolane groups of the general formula (VI) are especially preferred as component B). They are preferably compounds in which $R_5$ and $R_6$, which may be identical or different, denote hydrogen, aliphatic hydrocarbon groups containing from 1 to 18 carbon atoms, cycloaliphatic hydrocarbon groups containing from 5 to 10 carbon atoms, araliphatic hydrocarbon groups containing from 7 to 18 carbon atoms or phenyl groups, or the two groups $R_5$ and $R_6$ together with the adjacent carbon atom may form a five- six-membered cycloaliphatic ring, and $R_7$ denotes a divalent aliphatic hydrocarbon group containing 2 to 6 carbon atoms, with the proviso that there are 2 or 3 carbon atoms between both nitrogen atoms.

Components B) containing oxazolane groups may be prepared in known manner by reaction of the corresponding aldehydes or ketones corresponding to the following general formula ($R_5$ and $R_6$ having the meaning defined above) :

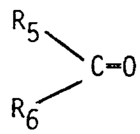

with suitable hydroxylamines of the type described hereinafter.

The aldehydes or ketones used may be selected from those already mentioned above as examples. Preferred aldehydes and ketones include isobutyraldehyde, 2-ethylhexanal, hexahydrobenzaldehyde, cyclopentanone, cyclohexanone, methylcyclohexanone, acetone, methyl ethyl ketone and methyl isobutyl ketone.

The hydroxylamines may be in particular organic compounds containing at least 1 aliphatic amino group and at least 1 aliphatically bound hydroxyl group. Although hydroxylamines containing aromatically or cycloaliphatically bound amino or hydroxyl groups may be used, they are less preferred. The hydroxylamines generally have a molecular weight of from 61 to 500, preferably from 61 to 300.

The following are examples of suitable hydroxylamines : bis(2-hydroxyethyl)-amine, bis(2-hydroxypropyl)-amine, bis(2-hydroxybutyl)-amine, bis(3-hydroxypropyl)-amine, bis(3-hydroxyhexyl)-amine, N-(2-hydroxypropyl)-N-(2-hydroxyethyl)-amine, 2-(methylamino)-ethanol, 2-(ethylamino)-ethanol, 2-(propylamino)-ethanol, 2-(butylamino)-ethanol, 2-(hexylamino)-ethanol, 2-(cyclohexylamino)-ethanol, 2-amino-2-methyl-1-propanol, 2-amino-2-ethyl-1-propanol, 2-amino-2-propyl-1-propanol, 2-amino-2-methyl-1,3-propanediol, 2-amino-3-methyl-3-hydroxybutane, propanolamine and ethanolamine.

The following are particularly preferred : bis(2-hydroxy-ethyl)-amine, bis(2-hydroxypropyl)-amine, bis(2-hydroxy-butyl)-amine, bis(3-hydroxyhexyl)-amine, 2-(methylamino)-ethanol, 2-(ethylamino)-ethanol, 2-amino-2-methyl-1-propanol, 2-amino-2-ethyl-1-propanol, propanolamine and ethanolamine.

When component (B) contains oxazolane groups it can be prepared by allowing to react the above-defined reactants in such quantitative ratios that based on the carbonyl groups of the aldehydes or ketones, the hydroxyamines are present in 1 to 1.5 times the equivalent quantity in the oxazolane formation. Catalytic quantities of acidic substances, e.g. p-toluene sulphonic acid, hydrogen chloride, sulphuric acid or aluminium chloride, may be used to accelerate the reaction. A suitable reaction temperature is in the range of 60 to 180 °C, the water formed in the reaction being removed by distillation using an entraining agent as described in US-P 4,975,493.

To produce components (B) having in their molecule a plurality of oxazolane moieties, mono-oxazolanes according to the above mentioned general formula (V) are allowed to react through hydrogen on their nitrogen atom with a polyfunctional reactant, e.g. polyisocyanate, polyepoxide, polycarboxylic acid, partially esterified polycarboxylic acid or polyacid anhydride. The reaction with organic polyisocyanates is preferred and may be carried out as described in DE-OS 2 446 438.

Examples of polyisocyanates which are suitable for this modifying reaction are aliphatic, cycloaliphatic, araliphatic, aromatic or heterocyclic polyisocyanates, such as those described, e.g. by W. Siefken in Justus Liebigs Annalen de Chemie, 562, p. 75 to 136, e.g. 1,4-tetramethylene diisocyanate, 1,6-hexamethylene diisocyanate, 1,12-dodecane diisocyanate, cyclobutane 1,3-diisocyanate, cyclohexane 1,3-diisocyanate, cyclohexane 1,4-diisocyanate, 1-isocyanato-3,3,5-trimethyl-5-isocyanatomethylcyclohexane, 1,4- and 2,6-hexahydrotoluylene diisocyanate, hexahydro-1,3- and -1,4-phenylene diisocyanate, 1,3-phenylene diisocyanate, 1,4-phenylene disocyanate, diphenylmethane-2,4'- and/or 4,4'-diisocyanate, naphthylene 1,5-diisocyanate, mixtures of these and other polyisocyanates, polyisocyanates having carbodiimide groups (as described e.g. in German Patent Specification 1,092,007), polyisocyanates having allophanate groups (as described e.g. in GB-P 994,890), polyisocyanates having isocyanurate groups (as described e.g. in German Patent Specifications 1,022,789 and 1,222,067) polyisocyanates having urethane groups (as described e.g. in US-P 3,394,164) or polyisocyanates prepared by reaction of at least one difunctional hydroxyl compound with excess of at least one difunctional isocyanate, polyisocyanates having biuret groups (as described e.g. in German Patent Specification 1,101,394) and prepolymer or polumer substances having at least two isocyanate groups.

Examples of suitable polyisocyanate compounds are further given in the book High Polymers, Volume XVI dealing with "Polyurethanes, Chemistry and Technology" Interscience Publishers, New York, London, and further also in Volume I, 1962, p. 32-42 and 45-54 and Volume II, 1964, p. 5-6 and 198-199, and also in Kunststoffhandbuch (Handbook of Plastics), Volume VI, Vieweg-Höchtlen, Carl-Hanser Verlag, Munich, 1966, p. 45-71.

Particularly preferred polyisocyanates for preparing polyfunctional oxazolanes are low molecular weight (cyclo)aliphatic diisocyanates, e.g. : hexamethylene diisocyanate, isophorone diisocyanate, 4,4'-diisocyanatodicyclohexylmethane or relatively high molecular weight isocyanate prepolymers based on such diisocyanates.

According to a preferred embodiment in the formation of polyfunctional oxazolanes said preferred polyisocyanates are allowed to react with monooxazolanes according to the above-mentioned general formula (VI) wherein nitrogen is linked to a HO-$CH_2$-$CH_2$- group to form an urethane linkage, $R_5$ represents hydrogen, $R_6$ an ethyl-1-pentyl group, and $R_7$ is an ethylene group.

Polyepoxides suitable for use in the preparation of polyfunctional oxazolanes are organic compounds containing at least two epoxide groups.

Preferred polyepoxides for such use are aliphatic bisepoxides having epoxide equivalent weights of 43 to 300, e.g. 1,3-butadiene bisepoxide, 1,5-hexadiene bisepoxide, ethylene glycol diglycidyl ether, glycerol-1,3-diglycidyl ether, 3,4-epoxycyclohexyl, methyl-3',4'-epoxycyclohexane carboxylate, and adipic acid-(3,4-epoxycyclohexyl)-bisester.

Still other methods of preparing oxazolanes of relatively high functionality are described in the already mentioned US-P 4,975,493.

The molecular weight and functionality of the oxazolanes of relatively high functionality may be adjusted readily through the choice of the reactants.

For use according to the present invention in the preparation of a moisture-curable binder for phosphor particles of a luminescent article, di- and/or trifunctional oxazolanes are applied preferably in conjunction with a copolymer of maleic anhydride and other monomers, e.g. styrene, methyl methacrylate and butyl acrylate, containing at least 10 % by weight of polymerised maleic anhydride units.

The following illustrates in detail the preparation of specific components (A) and (B) suited for use according to the present invention.

I. Preparation of the maleic anhydride copolymers A

General procedure for preparing the maleic anhydride copolymers $A_1$-$A_9$ mentioned in Table 1 under the heading MSA-copolymers A :

Part I is introduced initially into a reaction vessel equipped with a stirring, cooling and heating system, heated to the reaction temperature. Part II is added over a period of 3 hours and part III over a period of 3,5 hours, followed by stirring for 2 hours.

The reaction temperatures and the composition of parts I - III are shown in the following Table 1 together with the solids content and viscosity of the maleic anhydride (MA) copolymer solutions obtained.

TABLE 1

MA-Copolymers A (Quantities in g)

| | $A_1$ | $A_2$ | $A_3$ | $A_4$ | $A_5$ | $A_6$ | $A_7$ | $A_8$ | $A_9$ |
|---|---|---|---|---|---|---|---|---|---|
| **Part I** | | | | | | | | | |
| Butyl acetate | 1050 | 1534 | 1400 | | | 798 | 1670 | | 1500 |
| Methoxypropyl acetate | | | | 1200 | 800 | | | 1891 | |
| Xylene | | | | | | | 3300 | | |
| **Part II** | | | | | | | | | |
| Xylene | | | | | | | 1400 | | |
| Methyl methacrylate | 859 | 780 | 1025 | | 600 | 675 | 1080 | | 120 |
| Styrene | 313 | 180 | 341 | 450 | 30 | 350 | 3360 | 1013 | 870 |
| Butyl acrylate | 300 | 300 | 732 | 675 | 327.5 | 1056 | 4560 | 563 | 1410 |
| Glycidyl methacrylate | | 120 | | | | | | | |
| Maleic anhydride | 284 | 120 | 244 | 375 | 40 | 425 | 2400 | 300 | 480 |
| Hexanediol bisacrylate | | | | | 2.5 | | | | |
| Butyl acetate | | | | | | 1275 | 1000 | | 449 |
| n-Dodecylmercaptan | | | | | 10 | | | | |
| **Part III** | | | | | | | | | |
| 2,2'-azobis(isobutyronitrile) | | | | 30 | 20 | | | | |
| Ditert.butyl peroxide | | | | | | | 600 | | |
| tert.-butyl peroctoate (70%) | 105 | 86 | 140 | | | 105 | | 233 | 171 |
| Xylene | | | | | | | 600 | | |
| Methoxypropyl acetate | | | | 330 | 200 | | | | |
| Butyl acetate | 360 | | 118 | | | | | | |
| Reaction temperature (°C) | 115 | 120 | 120 | 130 | 120 | 126 | 150 | 145 | 125 |
| Solids content (%) | 55.2 | 50.0 | 60.4 | 55.7 | 40.6 | 56.4 | 60.0 | 49.3 | 59.5 |
| Viscosity (mPa.s) | 11100 | 900 | | 18700 | 576 | 1100 | 1100 | | 2100 |
| Anhydride equivalent weight (g) (theory) (1 mol MA/1 mol sec. amine) | 605 | 1225 | 940 | 392 | 2450 | 578 | 465 | 613 | 588 |

II. Preparation of blocked polyamines B

B 1) The bisketimine B 1 is obtained from 680 g of isophoronediamine, 1000 g of methyl isobutyl ketone and 560 g of toluene after separation of 146 g of water (theoretical quantity : 144 g) at 120°C and subsequent distillation.

B 2) 200 g of isobutyraldehyde and 133 g of cyclohexane are introduced under nitrogen atmosphere into a 1-l reaction vessel equipped with stirring, cooling and heating means and the reaction mixture is cooled to 10 °C in an ice bath. Thereupon 176.6 g of 1-amino-3-(methylamino)-propane are slowly added dropwise and the reaction mixture is stirred at 10 °C for one hour. It is then heated to reflux temperature until 52 g of water have separated off. After removal of the solvent and unreacted blocking agent by distillation hexahydropyrimidine is obtained.

B 3) By transforming propionic anhydride and aminoethanol by refluxing in xylene under azeotropic elimination of the reaction water (H.L. Wehrmeister, J. Org. Chem., 26, 3821 (1961)) a monooxazoline as defined hereinafter by structural formula is obtained that is purified by distillation :

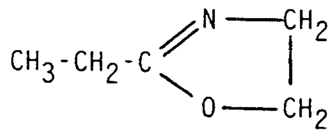

99 g of this monooxazoline, 88 g of ethylene carbonate and 0.4 g of lithium chloride are heated at 150 °C for 12 h. After distillation the colourless, bicyclic amidacetal crosslinking agent B 3) is obtained.

B 4) By transforming 528 g of 1-amino-3-methylaminopropane and 360 g of acetic acid in 99 g of toluene and elimination of the reaction water at 100 to 130 °C a tetrahydropyrimidine precursor is obtained (theor. : 216 g; found : 212.5 g), which after distillation is obtained in about 90 % yield as a bright and colourless liquid.

112 g of tetrahydropyrimidine precursor are made to react in 200 g of butyl acetate with 87 g of ethylene glycol diglycidyl ether at 120 to 130 °C for 5 h. After adding charcoal the reaction mixture is stirred for still 1 h, and filtered off unter nitrogen atmosphere. A yellow solution (about 50 %) of the difunctional bicyclic amidaminal B 4) is obtained.

Preparation of mono-oxazolanes and poly-oxazolanes B :

General procedure :

To prepare the mono-oxazolanes, the hydroxyamines, the carbonyl compounds and, optionally, the entraining agent are mixed and 0.01 to 0.1 % of an acidic catalyst is added optionally to the resulting mixture. The reaction mixture is then heated under reflux in an inert gas atmosphere (e.g. $N_2$, Ar) on a water separator until the theoretical quantity of water has separated off or until no more water separates off. The products thus obtained may be used for the combinations according to the invention without any further purification or separation step. When the purity or uniformity of the products has to meet particularly exacting requirements, the products may be purified, e.g. by vacuum distillation.

B 5) The mono-oxazolane B 5) is obtained from 210 g of diethanolamine, 158.4 g of isobutyraldehyde and 92.1 g of xylene after separation of 34.2 g of water (theoretical quantity : 36 g).

B 6) 536 g of trimethylolpropane, 1368 g of $\epsilon$-caprolactone, 476 g of dimethyldiglycol and 0.4 g of an esterification catalyst (tin dioctoate) are heated together to 140 °C for 4 h. Thereupon 297.5 g of the trimethylolpropane/$\epsilon$-caprolactone adduct thus prepared and 265.0 g of oxazolane B 5) are heated together to 50 °C. After the dropwise addition of 252 g of hexamethylene diisocyanate, the mixture is stirred at 70 °C for 6 h. The poly-oxazolane B 6) is obtained in the form of a 70% solution after the addition of 113 g of dimethyl diglycol.

B 7) The mono-oxazolane B 7) is obtained by condensation reaction from 210 g of diethanolamine, and 281.6 g of 2-ethylhexanal in 122.9 g of cyclohexane after separation of 35 g of water (theoretical quantity : 36 g).

B 8) 400 g of an aliphatic polyisocyanate containing biuret groups and based on the reaction with water of hexamethylene diisocyanate and 397 g of methoxypropyl acetate are introduced into a 2-litre reaction vessel equipped with stirrer, condenser and heating device. After the dropwise addition of 526.1 g of the oxazolane of diethanolamine and 2-ethylhexanal described in B 7), the temperature of the reaction mixture is maintained at 70 °C for 11 h. An approximately 70 % solution of poly-oxazolane agent B 8) containing a statistical average of 3 oxazolane groups pro macromolecule is obtained, i.e. 1.754 mmol of oxazolane units are contained in 1 g of 70 %wt solution.

B 9)

step a) 296 g of phthalic anhydride, 324 g of cyclohexane dimethanol and 52 g of neopentyl glycol are weighed in a reaction vessel suitable for esterification under a nitrogen atmosphere and heated to

220 °C for 8 h. Water is separated until the acid number has reached or dropped below 2.5. The polyester precursor B 9 a) is obtained.

step b) 145.2 g of the polyester precursor obtained in said step a) and 113.4 g of methoxypropyl acetate are weighed into a 1-litre reaction vessel equipped with stirrer, condenser and heating device and heated to 60 °C. Thereupon 119.5 g of the mono-oxazolane B 7) obtained from diethanolamine and 2-ethylhexanal is then added dropwise and stirring is continued at 70 °C for 3 h. After the addition of 318.4 g of polyester precursor B 9 a), the temperature is maintained at 70 °C for 11 h and cross-linking agent B 9) which is a polyester-based poly-oxazolane is then obtained as a 70 % solution.

B 10) poly-oxazolane is prepared from 187.8 g of an isocyanurate polyisocyanate, which has been prepared by partial trimerisation of the NCO groups of hexamethylene diisocyanate in accordance with EP-A-No. 10589 and which has an NCO content of 21.45 % by weight, and 1623 g of oxazolane (obtained as described for B 5) but from 1728 g of methyl ethyl ketone and 2100 g of diethanolamine). The highly viscous product is dissolved in butyl acetate to from a 70 % solution. The solution has a viscosity of 900 mPa.s at 23 °C.

B 11) polyoxazolane is prepared from 840 g of hexamethylene diisocyanate and 2360 g of oxazolane B 7). The product has a viscosity of 4000 mPa.s at 23 °C.

In the preparation of a preferred binder for use according to the present invention a mixture of components (A) and (B) is made in a water-free organic solvent or solvent mixture and the phosphor particles are dispersed therein to form a phosphor-binder layer composition ready for coating. The solvent(s) are used in a quantity necessary to obtain the required coating composition viscosity adapted to the applied coating system. The quantity of solvent may be kept fairly small by applying low molecular weight maleic anhydride copolymers.

According to a particular embodiment dispensing with solvent removal after coating, a liquid monomer or mixture of monomers is used that acts as solvent for the applied components (A) and (B). Said monomer or mixture of monomers, which has not to be removed by evaporation, can be polymerised at elevated temperature in the presence of a thermally activatable radical former for addition polymerisation.

The hardening of the binder obtained by reaction of components (A) and (B) proceeds quickly in the presence of atmospheric moisture entering the coating after its application. The hardening may be accelerated by heat e.g. in the temperature range of 40 to 130 °C, temperature at which applied solvents are removed by evaporation.

The weight ratio of phosphor to binder determines the light emission of the screen and the image sharpness. Generally, said ratio is within the range of from 100:1 to 1:1, preferably from 10:1 to 25:1.

The above defined binder composition prepared by curing said components (A) and (B) with moisture may be applied in combination with any kind of phosphor. A non-limitative survey of phosphors is given hereinafter.

Non-limitative survey of X-ray conversion screen phosphors

In the case of a conventional X-ray conversion screen the phosphor used is a fluorescent substance that has a good prompt emission of ultraviolet radiation and/or visible light when struck by penetrating X-ray radiation and low afterglow.

Such phosphors are, e.g. : calcium tungstate, zinc sulphide, zinc cadmium sulphide, zinc oxide and calcium silicate, zinc phosphate, alkali halides, cadmium sulphide, cadmium selenide, cadmium tungstate, magnesium fluoride, zinc fluoride, strontium sulphide, zinc sulphate, barium lead sulphate, barium fluorohalides, and mixtures of two or more of them. The above-mentioned phosphors may be activated with, e.g. europium, silver, copper, nickel. Phosphors which are particularly suitable for use in highspeed X-ray conversion screens are those selected from fluorescent substances containing elements with atomic number 39 or 57 to 71, which include rare earth elements such as yttrium, gadolinium, lanthanum and cerium. Particularly suitable are the rare earth oxysulphide and oxyhalide fluorescing materials activated with other selected rare earths e.g. lanthanum and gadolinium oxybromide and oxychloride activated with terbium, ytterbium or dysprosium, lanthanum and gadolinium oxysulphides activated with terbium, europium, or a mixture of europium and samarium, yttrium oxide activated with gadolinium, europium, terbium or thulium, yttrium oxysulphide activated with terbium or a mixture of terbium and dysprosium, yttrium tantalate doped with small amounts of terbium, strontium or lithium or a mixture thereof and activated with thulium, niobium, europium, gadolinium and/or neodymium.

The above mentioned phosphors and other rare earth fluorescent materials have been extensively described in the literature for which we refer, e.g. to EP 11909, EP 202875, EP 257138, DE 1,282,819, DE 1,952,812, DE 2,161,958, DE 2,329,396, DE 2,404,422, FR 1,580,544, FR 2,021,397, FR 2,021,398, FR

2,021,399, UK 1,206,198, UK 1,247,602, UK 1,248,968, US 3,546,128, US 3,725,704, US 4,220,551, US 4,225,653, also to K.A. Wickersheim et al. "Rare Earth Oxysulfide X-ray Phosphors", in the proceedings of the IEEE Nuclear Science Symposium, San Francisco, October 29-31, 1969, to S.P. Wang et al., IEEE Transactions on Nuclear Science, February 1970, p. 49-56, and to R.A. Buchanan, IEEE Transactions on Nuclear Science, February 1972, p. 81-83. A survey of blue-light- and green-light-emitting phosphors is given in EP 88820. Particularly useful blue-light and UV-light emitting phosphors are described in EP-A-0 202 875.

By using a plurality of phosphor layers of different composition or by using a radiographic screen containing a mixture of different phosphors, a fluorescence over the whole visible spectrum can be obtained so that such combination is particularly useful for recording with silver halide recording elements that have been made spectrally sensitive to light of the whole visible spectrum.

A particularly preferred two-layer phosphor combination comprises coating on a support as described hereinafter a first phosphor layer on the basis of $(Y,Sr,Li)TaO_4.Nb$, as disclosed in EP-A-0 202 875, and thereupon a second phosphor layer on the basis of $CaWO_4$. To either of these phosphor layers, in particular to the first phosphor layer may be added colorants in view of the enhancement of the image sharpness. Suitable colorants for this purpose are disclosed, e.g. in EP-0 178 592 and US 3,164,719.

Non-limitative survey of photostimulable phosphors

The photostimulable phosphor used in a stimulable X-ray conversion screen refers to a phosphor which can exhibit stimulated fluorescence when irradiated with a stimulating excitation light after X-ray irradiation. From the viewpoint of practical use, the stimulable phosphor is desired to give stimulated emission in the wavelength region of 300 to 700 nm when excited with stimulating rays in the wavelength region of 400 to 900 nm. Alternatively, stimulable phosphors emitting around 600 nm, such as described in US 4,825,085, can be used. As the stimulable phosphor to be used, there may be mentioned, e.g. those described in EP 304121, EP 345903, EP 353805, EP 382295, US 3,859,527, US 4,236,078, US 4,239,968, JP 73/80487, JP 73/80488, JP 73/80489, JP 76/29889, JP 77/30487, JP 78/39277, JP 79/47883, JP 80/12142, JP 80/12143, JP 80/12144 = US 4,236,078, JP 80/12145, JP 80/84389, JP 80/160078, JP 81/116777, JP 82/23673, JP 82/23675, JP 82/148285, JP 83/69281, JP 84/56479. The divalent europium-activated alkaline earth metal halide phosphors and rare earth element activated rare earth oxyhalide phosphos are particularly preferred, because these show stimulated emission of high luminance.

The photostimulable X-ray conversion screen may contain an assemblage of photostimulable phosphor layers containing one or more photostimulable phosphors. The photostimulable phosphors contained in distinct photostimulable phosphor layers may be either identical or different. In the phosphor layers the phosphor particles may be of the same or different chemical structure and when different in structure of the same or different particle size and/or distribution.

It is general knowledge that sharper images with less noise are obtained with phosphor particles of smaller mean particle size, but light emission efficiency declines with decreasing particle size. Thus, the optimum mean particle size for a given application is a compromise between imaging speed and image sharpness desired.

The phosphors are in the form of a layer applied to a support, or are applied as a self-supporting layer or sheet. In the latter case the self-supporting screen is realized e.g. by "hot-pressing" using a fairly high viscous binder composition for dispersing therein the phosphor particles.

According to another procedure a self-supporting phosphor sheet is obtained by applying a coating composition containing the phosphor dispersed in an organic binder solution onto a temporary support, e.g. glass plate, wherefrom the coated and dried self-supporting layer is stripped off.

The curable binder components may be used to some extent in combination with known organic-solvent-soluble binders of phosphor-binder layers, these binders being soluble in the solvents used in dissolving components (A) and (B) of the curable composition. For example, up to 50 % by weight of such known binder with regard to the curable binder may be present.

Non-limitative survey of organic solvent soluble binders

Synthetic polymers such as polyvinyl butyral, polyvinyl acetate, nitrocellulose, ethylcellulose, vinylidene chloride/vinyl chloride copolymer, polyalkyl (meth)acrylate, vinyl chloride/vinyl acetate copolymer, polyurethane, cellulose acetate, cellulose acetate butyrate, polyvinyl alcohol, polystyrene, polyester, etc. These and other useful binders are disclosed in US-P 2,502,529, 2,887,379, 3,617,285, 3,300,310, 3,300,311 and 3,743,833.

According to a special embodiment said components (A) and (B) are used in combination with reagents that split off water on heating, e.g. in a polycondensation reaction of (poly)carboxylic acids with polyols, e.g. polyester prepolymers having terminal hydroxyl groups, vinyl alcohol copolymers, partially esterified cellulose, and/or polyoxyalkylene compounds.

Thickness of the phosphor layer

The thickness of the phosphor layer, which may differ depending on the sensitivity of the radiographic screen to radiation, the kind of the phosphor, etc., may be within the range of from 10 to 1,000 micron, preferably from 50 to 500 micron, more preferably from 150 to 250 micron.

Two or more phosphor layers with different thickness and/or different binder:phosphor ratio and/or different phosphor particle size may be used in the composition of a radiographic screen.

Radiographic screens, in particular those comprising conventional non-stimulable phosphors as described above, can also be in the form of gradual screens, i.e. screens having a gradual intensification along their length and/or width. Graduality can be achieved by gradually increasing the thickness of the phosphor layer over the length or width of the screen or by incorporating into the protective layer or an interlayer between the protective layer and phosphor containing layer a gradually increasing amount of dye capable of absorbing the light emitted by the phosphor.

Non-limitative survey of support materials

Examples of the support material for coating thereon the phosphor-binder layer prepared according to the present invention are : cardboard, plastic films such as films of cellulose acetate, polyvinyl chloride, polyvinyl acetate, polyacrylonitrile, polystyrene, polyester, polyethylene terephthalate, polyamide, polyimide, cellulose triacetate and polycarbonate; metal sheets such as aluminium foil and aluminium alloy foil; ordinary papers; baryta paper; resin-coated papers; pigment papers containing titanium dioxide or the like; and papers sized with polyvinyl alcohol or the like. A plastic film is preferably employed as the support material.

The plastic film may contain a light-absorbing material such as carbon black, or a light-reflecting material such as titanium dioxide or barium sulfate. The former is appropriate for preparing a high-resolution type radiographic screen, while the latter is appropriate for preparing a highly sensitive radiographic screen.

Examples of preferred supports include polyethylene terephthalate, clear or blue coloured or black coloured (e.g. , LUMIRROR C, type X30 supplied by Toray Industries, Tokyo, Japan), polyethylene terephthalate filled with $TiO_2$ or with $BaSO_4$.

These supports have a thickness which may differ depending on the material of the support. The thickness is generally be between 60 and 1,000 micron, more preferably between 80 and 500 micron for easy handling.

Coating procedure of the phosphor layer

Phosphor particles and the dissolved binder components are intimately mixed to prepare a coating dispersion. Said coating dispersion may further comprise a dispersing agent and plasticizer and filler material as described hereinafter.

The coating dispersion containing the phosphor particles and the binder is applied uniformly onto the surface of the support to form a layer of the coating dispersion. Coating may proceed according to any conventional method such as doctor blade coating, dip-coating, roll coating, gravure coating, screen (printing) coating, wire-bar coating or extrusion coating.

After the coating dispersion has been applied to the support, it is heated slowly to dryness so as to complete the formation of a phosphor layer.

In order to remove as much as possible entrapped air in the phosphor coating composition it can be subjected to an ultra-sonic treatment before coating. The phosphor-binder layer can be calendered before completely dry to improve the phosphor packing density in the dried layer.

Useful solvents for the binder of the phosphor containing layer

Examples of solvents employable in the preparation of the phosphor coating dispersion include e.g. ketones such as acetone, butanone, methyl ethyl ketone, methyl isobutyl ketone, cyclohexanone, isophorone; esters of lower alcohols and lower aliphatic acids such as methyl acetate, ethyl acetate and

butyl acetate; ethers such as dioxane, ethylene glycol monoethylether, methyl glycol, dimethyl glycol, methyl glycol acetate, hydrocarbons such as gasoline, solvent naphtha, hexane, toluene, xylene and ethylbenzene, terpenes and mixtures of the above-mentioned solvents.

Useful dispersing agents

The coating dispersion may contain a dispersing agent to improve the dispersibility of the phosphor particles therein, and may contain a variety of additives such as a plasticiser for increasing the bonding between the binder and the phosphor particles in the phosphor layer.

Examples of the dispersing agent include well-known ionic and nonionic dispersing agents or combinations thereof, e.g., GAFAC RM 610 (tradename of General Aniline and Film Company (GAF), New York, USA for a polyoxyethylene (20 recurring units) sorbitan monopalmitate and monolaurate, polymeric surfactants such as the acrylic graft copolymer PHOSPHOLIPON 90 (tradename of Nattermann-Phospholipid GmbH, Köln, Germany, silane dispersing agents and surfactants e.g. DOW CORNING 190 (tradename) and SILANE Z6040 (tradename of Dow Corning Corporation, Midland, Michigan, USA) or glymo 3-glycidyloxypropylmethoxysilane or organosulphate polysilanes, unsaturated p-aminamide salts and high molecular acid esters such as ANTI TERRA U 80 (tradename of BYK-Chemie GmbH, Wesel, Germany for high molecular weight unsaturated polyesters. Dispersing agents are added in an amount of 0.05 to 10 % by weight based on the phosphor.

Useful plasticisers

Examples of plasticisers include phosphates such as triphenyl phosphate, tricresyl phosphate and diphenyl phosphate; phthalates such as diethyl phthalate and dimethoxyethyl phthalate; glycolates such as ethyl phthalyl ethyl glycolate and butyl phthalyl butyl glycolate; polymeric plasticisers, e.g. and polyesters of polyethylene glycols with aliphatic dicarboxylic acids such as the polyester of triethylene glycol with adipic acid and the polyester of diethylene glycol with succinic acid.

Useful fillers

The coating dispersion may also contain a filler (reflecting or absorbing) or may be coloured by a colorant capable of absorbing light within the spectrum emitted by the phosphor or capable of absorbing excitation light in the case of a stimulable X-ray conversion screen. Examples of colorants include Solvent Orange 71 (Diaresin Red 7), Solvent Violet 32 (Diaresin Violet A), Solvent Yellow 103 (Diaresin Yellow C) and Solvent Green 20 (all four supplied by Mitsubishi Chemical Industries, Japan), Makrolex Rot GS, Makrolex Rot EG, Makrolex Rot E2G, Helioechtgelb 4G and Helioechtgelb HRN (all five marketed by Bayer AG, Leverkusen, Germany), Neozaponfeuerrot G and Zaponechtbraun BE (both marketed by BASF, Ludwigshafen, Germany).

Subbing layer or interlayer compositions

In the preparation of a radiographic screen, one or more additional layers are provided optionally between the support and the phosphor-containing layer, so as to improve bonding between the support and the phosphor layer or to improve the sensitivity of the screen or the sharpness and resolution of an image provided thereby. For example, a subbing layer or an adhesive layer may be provided by coating polymer material such as gelatin over the surface of the support on the phosphor layer side. A light-reflecting layer or a light-absorbing layer may be provided, e.g. by vacuum-depositing an aluminium layer or by coating a pigment-binder layer wherein the pigment is, e.g. titanium dioxide. For the manufacture of light-absorbing layer carbon black dispersed in a binder may be used but also any known anti-halation dye. Such additional layer(s) may be coated on the support either as a backing layer or interposed between the support and the phosphor-containing layer(s). Several of said additional layers may be combined.

The invention is illustrated by the following examples without however limiting it thereby. All ratios, parts and percentages are by weight unless mentioned otherwise.

COMPARATIVE EXAMPLE

- Preparation of non-invention phosphor screen (A)

A blue light emitting $CaWO_4$ phosphor was predispersed in a low viscosity presolution of binder. Thereto into a beaker were introduced 0.75 g of GAFAC RM 610 (tradename) dispersing agent and a solution of 3.0 g of cellulose acetate-butyrate binder (CAB polymer having 0.93 acetyl, 1.76 butyryl and 0.31 hydroxyl groups per anhydroglucose residue) in 24.34 g of methyl ethyl ketone, 10.9 g 1-methoxy-2-propanol and 0.63 g of ethyl acetate. To the dissolved binder and dispersing agent 150 g of $CaWO_4$ phosphor particles were added, stirred and homogenized in pearl mill for 5 minutes. Thereupon to the homogenized phosphor dispersion 15 g of binder solution of the above mentioned cellulose acetate-butyrate (4.5 g of binder in 10.5 g of methyl ethyl ketone) were added to obtain the phosphor-predispersion.

Next, a further amount of said CAB polymer together with a polyethyl acrylate (PEA) polymer were added to the phosphor predispersion dissolved in ethyl acetate and methyl ethyl ketone to obtain a dispersion containing 70 % of solids consisting of 88.89 % of phosphor pigment and 11.11 % of binder. The binder itself consisted of 40 % of said CAB and 60 % of said PEA, and the coating solvent composition consisted of 48 % of methyl ethyl keton, 15 % of 1-methoxy-2-propanol, and 37 % of ethyl acetate.

The thus obtained phosphor dispersion was deaerated by putting it under vacuum and then doctor blade coated at a wet thickness of 750 µm onto a black coloured subbed polyethylene terephthalate support having a thickness of 180 µm. The subbing layer was a primer layer on the basis of a UV-cured mixture of 30 parts of a copolyester of isophthalic acid, terephthalic acid, sebacic acid (35/60/5), and a mixture of ethylene glycol and neopentyl glycol (50/50), 70 parts of of 1,6-hexanediol diacrylate, and 10 parts of the photo-initiator 2-hydroxy-2-methyl-1-phenyl-propan-1-one.

Onto the dried phosphor-binder layer a phosphor-free protective topcoat was coated from a 10 % solution of CAB polymer in a solvent mixture consisting of 18 % of acetone, 11 % of 1-methoxy-2-propanol and 71 % of isopropanol. The dried topcoat had a thickness of 8 µm, and the total thickness of topcoat combined with phosphor-binder layer was 142.9 µm.

- Preparation of invention-phosphor screen (B)

The same blue light emitting $CaWO_4$ phosphor as used for the preparation of comparison phosphor screen (A) was predispersed in a low viscosity presolution of binder. Thereto into a beaker were introduced 0.75 g of GAFAC RM 610 (tradename) dispersing agent and 12.072 g of a copolymer being co(maleic anhydride-styrene-methyl methacrylate-n-butyl acetate) (16:29:4:51) dissolved in 9.12 g of methyl ethyl keton, 2.85 g of 1-methoxy-2-propanol and 15.01 g of butyl acetate. The solvents were used in their anhydrous state.

To the dissolved binder and dispersing agent 150 g of $CaWO_4$ phosphor particles were added, stirred and homogenized in pearl mill for 3 minutes. Thereupon to the homogenized phosphor dispersion 3.54 g of a 70 % solution of poly-oxazolane B 8) in butyl acetate were added which corresponds with an equimolar ratio of oxazolane units to maleic anhydride units of the above defined copolymer.

Such resulted in a coating composition containing 85 % of solids, which solids consisted of 88.89 % of phosphor and 11.11 % of binder. The applied solvent combination consisted of 30.49 % of methyl ethyl ketone, 9.53 % of 1-methoxy-2-propanol and 59.98 % of butyl acetate. After the addition of 3 ml of methyl ethyl ketone the dispersion is vacuum-deaerated.

The thus treated phosphor dispersion was applied by doctor blade coating at a wet thickness of 500 µm to a black coloured subbed polyethylene terephthalate support having a thickness of 180 µm. The subbing layer was the same as for screen (A). After evaporation of the solvents a phosphor-binder layer having a thickness of 147.4 µm was obtained.

Onto said dried phosphor-binder layer no protective topcoat was applied.

Abrasion resistance test

Both screens (A) and (B) were subjected to an abrasion resistance test of the type described in ASTM DG73-70. In said test a piece of each phosphor screen sample was rotatively arranged on a test table inclined at an angle of 45 ° with respect to a free falling stream of tungsten carbide grains having a total weight of 500 g. The impact of said grains on the phosphor coated side of the rotating screen sample effects a reduction in gloss which is inversely proportional to the resistance to abrasion.

The gloss was measured with a glossmeter (according to the modus operandi of International Standard ISO 2813-1978 (E). The registration of the gloss proceeded at a light incidence and light reflection angle of 60° with respect to the perpendicular.

By said test the comparison sample screen (A) showed a 39.1 % reduction in gloss, whereas the invention sample screen (B) without top coat showed a reduction in gloss of only 13.8 % proving a better resistance to abrasion.

Adherence test

The adherence of the phosphor-binder dispersion layers of both the comparison phosphor screen sample and of the invention phosphor screen sample were determined by means of a so-called "cross-cut" test.

In each phosphor layer incissions were made up to the surface of the support. The incissions were made with a sharp knife forming cuts crossing each other at right angles with interdistance of 0.5 cm.

In the test onto the obtained cross-line pattern an adhesive TESA (tradename) tape (type 4323) was pressed with finger and tumb, whereupon the tape was torn off abruptly.

Of both samples no phosphor layer material was peeled off which proved good adherence of the described phosphor-binder layers to the same support.

Sensitometric imaging characteristics of screens (A) and (B)

The radiographic intensifying screens (A) and (B) screens were each separately combined with an X-ray film CURIX RP1 (tradename of AGFA-GEVAERT N.V.) being vacuum packed in a non-light transmitting plastic bag and exposed to X-rays at 70 KVp and filtered to a half value (HVL) of 7.1 mm aluminium (Al).

The exposed films were developed in the same developer on the market for developing that type of film.

Relative Speed (log S) was determined according to DIN 6867 - Part 1.

Sharpness, as characterized by means of Square Wave Response (SWR), was determined according to DIN 6867 - Part 2, and measured at spatial frequencies of 1 and 3 linepairs (lp) per mm.

Granularity, as characterized by means of the Root Mean Square (RMS) diffuse density fluctuation, was determined by means of a microdensitometer with an aperture of 400 micron.

The obtained results of Relative Speed (S), sharpness (SWR) and RMS-granularity are presented in the following Table 2.

TABLE 2

| Screen | Speed log value | SWR 1 lp/mm | SWR 3 lp/mm 3 lp/mm | RMS x$10^{-3}$ |
|---|---|---|---|---|
| (A) | 0.10 | 0.63 | 0.21 | 11.5 |
| (B) | 0.12 | 0.65 | 0.24 | 10.8 |

As can be learned from said results the radiographic topcoat-free intensifying screen (B) according to the present invention yields in comparison with the topcoat-containing comparison screen (A) a higher speed and provides higher sharpness together with lower granularity.

## Claims

**1.** A method of manufacturing a luminescent article comprising a supported or self-supporting phosphor-binder layer including a chemically cured binder, which method comprises the steps of (1) coating a dispersion of phosphor particles in a solution of uncured binder in a solvent or solvent mixture on a temporary or permanent support, (2) removing the solvent(s) by evaporation, and (3) curing said binder with the aid of moisture ($H_2O$), wherein the binder is formed substantially from a moisture-hardening binder composition prepared by mixing the following components (A) and (B) :

(A) 30 to 99 parts by weight of at least one copolymer of olefinically unsaturated compounds having a weight-average molecular weight [$\overline{M}w$] of at least 1500 and containing chemically incorporated moieties capable of undergoing an addition reaction with amino groups, and

(B) 1 to 70 parts by weight of organic substances containing blocked amino groups from which substances under the influence of moisture compounds having free primary and/or secondary amino

groups are formed, and

wherein i) the copolymers of component (A) contain intramolecularly bound carboxylic anhydride moieties, with the anhydride equivalent weight of the copolymers being from 393 to 9,800 and ii) the binder composition contains from 0.25 to 10 anhydride moieties for each blocked amino group.

**2.** Method according to claim 1, wherein said component (A) consists essentially of a copolymer of :

a) 3 to 25 parts by weight of maleic anhydride, and

b) 75 to 97 parts by weight of at least one copolymerisable monomer selected from the group corresponding to the following general formulae (I), (II) and (III) :

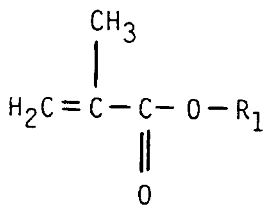

(I)

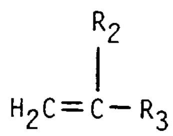

(II)

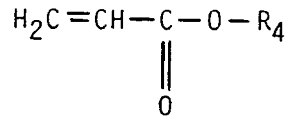

(III)

wherein :

each of $R_1$ and $R_4$ independently of each other represents an aliphatic or cycloaliphatic $C_1$ - $C_{18}$ hydrocarbon group in which one or more carbon atoms may be replaced by heteroatoms selected from the group consisting of oxygen, sulphur and nitrogen.

$R_2$ is hydrogen, methyl, ethyl, chlorine or fluorine, and

$R_3$ is a $C_2$ - $C_{15}$ aliphatic hydrocarbon group, a $C_5$ - $C_{10}$ cycloaliphatic hydrocarbon group, a $C_7$ - $C_{18}$ araliphatic hydrocarbon group, a $C_6$ - $C_{12}$ aromatic hydrocarbon group containing one or more heteroatoms selected from the group consisting of oxygen, sulphur and nitrogen in the form of ether, ester, amide, urethane, urea, thioester, oxirane, ketone, lactam or lactone group; and

wherein component (B) is a compound selected from the group consisting of an aldimine, ketimine, oxazolane, hexahydropyrimidine, tetrahydroimidazole, dihydroimidazole, tetrahydropyrimidine, amidacetal and amidaminal.

**3.** Method according to claim 2, wherein said maleic anhydride copolymers (A) have a weight-average molecular weight [$\overline{M}w$] determined by gel chromatography of 3,000 to 50,000, and their anhydride equivalent weight (= quantity in gram containing 1 mole of anhydride groups) is from 3,800 to 393.

**4.** Method according to claim 2 or 3, wherein said maleic anhydride copolymers (A) contain styrene, methacrylate and/or acrylate units.

**5.** Method according to any of the claims 1 to 4, wherein component (B) contains a statistical average of from 1 to 50 structural units corresponding to at least one of the following general formulae (IV), (V), (VI), (VII), (VIII) and (IX):

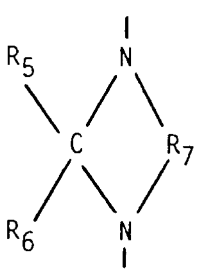

(IV)

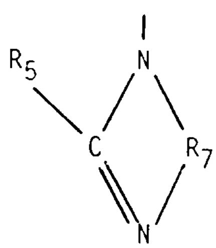

(V)

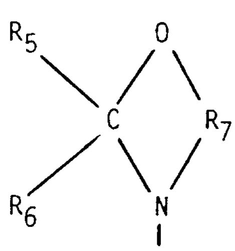

(VI)

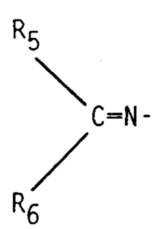

(VII)

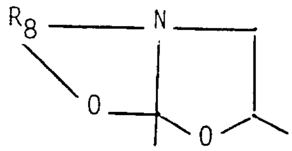

(VIII)

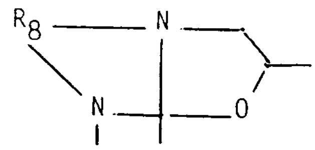

(IX)

wherein :
each of $R_5$ and $R_6$ independently of each other represents hydrogen, an aliphatic hydrocarbon group containing from 1 to 18 carbon atoms, a cycloaliphatic hydrocarbon group containing from 5 to 10 carbon atoms, an araliphatic hydrocarbon group containing from 7 to 18 carbon atoms or a phenyl group, or
$R_5$ and $R_6$ represent together the necessary atoms to form a five- or six-membered cycloaliphatic ring with the carbon atom whereto they are commonly linked,
$R_7$ represents a divalent aliphatic hydrocarbon group containing 2 to 6 carbon atoms, but having only a chain of 2 to 3 carbon atoms between the defined heteroatoms of the ring,
$R_8$ represents a divalent aliphatic hydrocarbon group having 2 to 10 carbon atoms, but having only 2 or 3 carbon atoms between the heteroatoms whereto said group is linked.

**6.** Method according to claim 5, wherein said blocked amines have a molecular weight of from 86 to 10,000.

**7.** Method according to any of claims 5 and 6, wherein component (B) is a polyoxazolane obtained by allowing to react a mono-oxazolane according to said general formula (V) through hydrogen on its nitrogen atom with a polyfunctional reactant selected from the group consisting of a polyisocyanate, polyepoxide, polycarboxylic acid, partially esterified polycarboxylic acid or polyacid anhydride.

**8.** Method according to claim 7, wherein said polyfunctional reactant is an aliphatic, cycloaliphatic, araliphatic, aromatic or heterocyclic polyisocyanate.

**9.** Method according to any of the preceding claims, wherein the weight ratio of phosphor to binder is within the range of from 100:1 to 1:1.

**10.** A luminescent article which comprises a self-supporting or supported layer of phosphor particles dispersed in a cured resin binder, wherein said binder is a moisture-hardened binder composition obtained by allowing water to come into contact with a mixture essentially consisting of the following components (A) and (B) :

(A) 30 to 99 parts by weight of at least one copolymer of olefinically unsaturated compounds having a weight-average molecular weight [$\overline{M}w$] of at least 1500 and containing chemically incorporated moieties capable of undergoing an addition reaction with amino groups, and
(B) 1 to 70 parts by weight of organic substances containing blocked amino groups from which substances under the influence of moisture compounds having free primary and/or secondary amino groups are formed, and

wherein i) the copolymers of component (A) contain intramolecularly bound carboxylic anhydride moieties, with the anhydride equivalent weight of the copolymers being from 393 to 9,800 and ii) the binder composition contains from 0.25 to 10 anhydride moieties for each blocked amino group.

**11.** Luminescent article according to claim 10, wherein said component (A) consists essentially of a copolymer of :

a) 3 to 25 parts by weight of maleic anhydride, and
b) 75 to 97 parts by weight of at least one copolymerisable monomer selected from the group corresponding to the following general formulae (I), (II) and (III) :

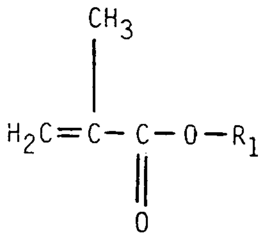

(I)

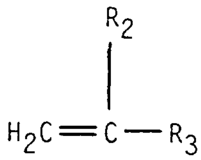

(II)

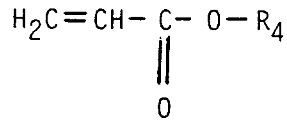

(III)

wherein :

each of $R_1$ and $R_4$ independently of each other represents an aliphatic or cycloaliphatic $C_1$ - $C_{18}$ hydrocarbon group in which one or more carbon atoms may be replaced by heteroatoms selected from the group consisting of oxygen, sulphur and nitrogen,

$R_2$ is hydrogen, methyl, ethyl, chlorine or fluorine, and

$R_3$ is a $C_2$ - $C_{15}$ aliphatic hydrocarbon group, a $C_5$ - $C_{10}$ cycloaliphatic hydrocarbon group, a $C_7$ - $C_{18}$ araliphatic hydrocarbon group, a $C_6$ - $C_{12}$ aromatic hydrocarbon group containing one or more heteroatoms selected from the group consisting of oxygen, sulphur and nitrogen in the form of ether, ester, amide, urethane, urea, thioester, oxirane, ketone, lactam or lactone group; and

wherein component (B) is a compound selected from the group consisting of an aldimine, ketimine, oxazolane, hexahydropyrimidine, tetrahydroimidazole, dihydroimidazole, tetrahydropyrimidine, amidacetal and amidaminal.

**12.** Luminescent article according to claim 11, wherein said maleic anhydride copolymers (A) have a weight-average molecular weight [Mw] determined by gel chromatography of 3,000 to 50,000, and their anhydride equivalent weight (= quantity in gram containing 1 mole of anhydride groups) is from 3,800 to 393.

**13.** Luminescent article according to claims 11 or 12, wherein said maleic anhydride copolymers (A) contain styrene, methacrylate and/or acrylate units.

**14.** Luminescent article according to any of claims 10 to 13, wherein component (B) contains a statistical average of from 1 to 50 structural units corresponding to at least one of the following general formulae (IV), (V), (VI), (VII), (VIII) and (IX):

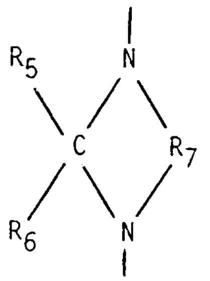

(IV)

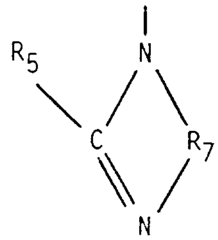

(V)

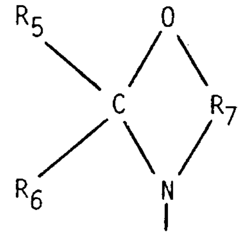

(VI)

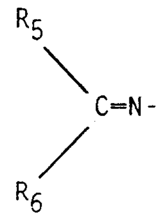

(VII)

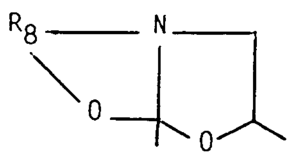

(VIII)

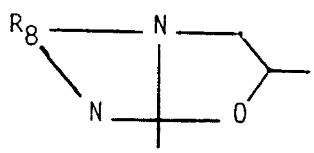

(IX)

wherein :

each of $R_5$ and $R_6$ independently of each other represents hydrogen, an aliphatic hydrocarbon group containing from 1 to 18 carbon atoms, a cycloaliphatic hydrocarbon group containing from 5 to 10 carbon atoms, an araliphatic hydrocarbon group containing from 7 to 18 carbon atoms or a phenyl group, or

$R_5$ and $R_6$ represent together the necessary atoms to form a five- or six-membered cycloaliphatic ring with the carbon atom whereto they are commonly linked,

$R_7$ represents a divalent aliphatic hydrocarbon group containing 2 to 6 carbon atoms, but having only a chain of 2 to 3 carbon atoms between the defined heteroatoms of the ring,

$R_8$ represents a divalent aliphatic hydrocarbon group having 2 to 10 carbon atoms, but having only 2 or 3 carbon atoms between the heteroatoms whereto said group is linked.

**15.** Luminescent article according to claim 14, wherein said blocked amines have a molecular weight of from 86 to 10,000.

**16.** Method according to any of claims 14 and 15, wherein component (B) is a polyoxazolane obtained by allowing to react a mono-oxazolane according to said general formula (V) through hydrogen on its nitrogen atom with a polyfunctional reactant selected from the group consisting of a polyisocyanate, polyepoxide, polycarboxylic acid, partially esterified polycarboxylic acid or polyacid anhydride.

**17.** Luminescent article according to claim 16, wherein said polyfunctional reactant is an aliphatic, cycloaliphatic, araliphatic, aromatic or heterocyclic polyisocyanate.

**18.** Luminescent article according to any of claims 10 to 17, wherein the weight ratio of phosphor to binder is within the range of from 100:1 to 1:1.

**Patentansprüche**

**1.** Verfahren zur Herstellung eines lumineszierenden Artikels, der eine auf einen Träger angebrachte oder selbsttragende Leuchtstoff-Bindemittelschicht mit einem chemisch gehärteten Bindemittel enthält, welches Vefahren die folgenden Stufen umfaßt :

(1) Auftragen einer Dispersion von Leuchtstoff-Partikeln in einer Lösung von ungehärtetem Bindemittel in einem Lösungsmittel oder Lösungsmittelgemisch auf einen vorläufigen oder permanenten

Träger,

(2) Entfernen des (der) Lösungsmittel(s) durch Verdampfung, und (3) Härtung des Bindemittels mit Hilfe von Feuchtigkeit ($H_2O$), dadurch gekennzeichnet, daß sich das Bindemittel hauptsächlich aus einer durch Feuchtigkeit härtende Bindemittelzusammenstellung bildet, hergestellt durch Vermischung der folgenden Komponenten (A) und (B):

(A) 30 bis 99 Gewichtsteile von wenigstens einem Copolymeren aus olefinisch ungesättigten Verbindungen, das ein gewichtsdurchschnittliches Molekulargewicht [Mw] von mindestens 1500 hat und chemisch einverleibte Anteile enthält, die zu einer Additionsreaktion mit Aminogruppen befähigt sind, und

(B) 1 bis 70 Gewichtsteile von blockierte Aminogruppen enthaltenden organischen Substanzen, aus denen sich Stoffe bilden unter dem Einfluß von Feuchtigkeitsverbindungen, die freie, primäre und/oder sekundäre Aminogruppen aufweisen, und

dadurch, daß i) die Copolymeren der Komponente (A) intramolekular gebundene Carbonsäureanhydrid-Anteile enthalten, wobei das Anhydrid-Äquivalentgewicht (= in Gramm ausgedrückte Menge, die 1 Mol Anhydridgruppen enthält) der Copolymeren zwischen 393 und 9800 liegt und ii) die Bindemittelzusammenstellung 0,25 bis 10 Anhydrid-Anteile je blockierte Aminogruppe enthält.

**2.** Verfahren nach Anspruch 1, dadurch gekennzeichnet, daß die Komponente (A) sich hauptsächlich zusammensetzt aus einem Copolymeren von:

a) 3 bis 25 Gewichtsteilen Maleinsäureanhydrid und

b) 75 bis 97 Gewichtsteilen von wenigstens einem copolymerisierbaren Monomeren entsprechend einer der folgenden allgemeinen Formeln (I), (II) und (III) :

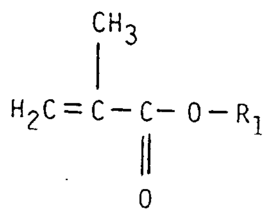

(I)

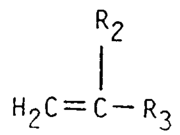

(II)

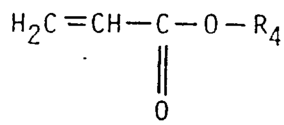

(III)

in denen bedeuten:

$R_1$ und $R_4$ unabhängig voneinander eine aliphatische oder cycloaliphatische $C_1$ - $C_{18}$ Kohlenwasserstoffgruppe, in der ein oder mehrere Kohlenstoffstome durch ein Sauerstoff-, Schwefel- oder Stickstoffatom ersetzt sein kann,

$R_2$ Wasserstoff, Methyl, Ethyl, Chlor oder Fluor, und

$R_3$ eine $C_2$ - $C_{15}$ aliphatische Kohlenwasserstoffgruppe, eine $C_5$ - $C_{10}$ cycloaliphatische Kohlenwasserstoffgruppe, eine $C_7$ - $C_{18}$ araliphatische Kohlenwasserstoffgruppe, eine $C_6$ - $C_{12}$ aromatische Kohlenwasserstoffgruppe, die eine oder mehrere Sauerstoff-, Schwefel- oder Stickstoffatome in der Form einer Ether-, Ester-, Amid-, Urethan-, Thioharnstoff-, Thioester-, Oxiran-, Keton-, Lactam- oder Lactongruppe enthält; und

dadurch, daß Komponente (B) ein Aldimin, Ketimin, Oxazolan, Hexahydropyrimidin, Tetrahydroimidazol, Dihydroimidazol, Tetrahydropyrimidin, Amidacetal oder Amidaminal ist.

**3.** Verfahren nach Anspruch 2, dadurch gekennzeichnet, daß die Maleinsäureanhydrid-Copolymeren (A) ein durch Gelchromatografie bestimmtes gewichtsdurchschnittliches Molekulargewicht [Mw] von 3000 bis 50 000 haben und ihr Anhydrid-Äquivalentgewicht zwischen 3800 und 393 liegt.

**4.** Verfahren nach Anspruch 2, dadurch gekennzeichnet, daß die Maleinsäureanhydrid-Copolymeren (A) Styrol-, Methacrylat- und/oder Acrylat-Einheiten enthalten.

**5.** Verfahren nach Anspruch 1, dadurch gekennzeichnet, daß Komponente (B) ein statistisches Mittel von 1 bis 50 Struktureinheiten nach mindestens einer der folgenden allgemeinen Formeln (IV), (V), (VI), (VII), (VIII) und (IX) enthält:

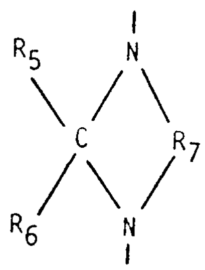

(IV)

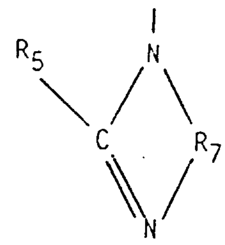

(V)

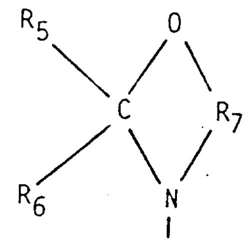

(VI)

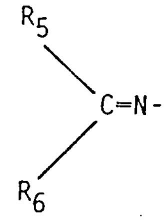

(VII)

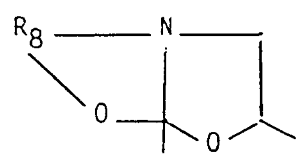

(VIII)

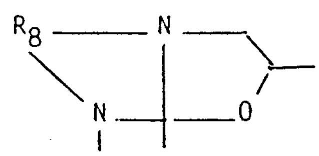

(IX)

in denen bedeuten:

$R_5$ und $R_6$ unabhängig voneinander je Wasserstoff, eine aliphatische $C_1$ - $C_{18}$-Kohlenwasserstoffgruppe, eine cycloaliphatische $C_5$ - $C_{10}$ -Kohlenwasserstoffgruppe, eine araliphatische $C_7$ - $C_{18}$ -Kohlenwasserstoffgruppe oder eine Phenylgruppe, oder

$R_5$ und $R_6$ zusammen die erforderlichen Atome zur Bildung eines 5- oder 6-gliedrigen cycloaliphatischen Ringes mit dem Kohlenstoffatom, an den sie gemeinsam gebunden sind,

$R_7$ eine divalente aliphatische $C_2$ - $C_6$ -Kohlenwasserstoffgruppe, die jedoch eine Kette von nur 2 bis 3 Kohlenstoffatomen zwischen den angegebenen Heteroatomen des Ringes aufweist,

$R_8$ eine divalente aliphatische $C_2$ - $C_{10}$ -Kohlenwasserstoffgruppe, die jedoch nur 2 oder 3 Kohlenstoffatome zwischen den Heteroatomen aufweist, an die diese Gruppe gebunden ist.

**6.** Verfahren nach Anspruch 5, dadurch gekennzeichnet, daß die blockierten Amine ein Molekulargewicht von 86 bis 10 000 aufweisen.

**7.** Verfahren nach Anspruch 5, dadurch gekennzeichnet, daß Komponente (B) ein Polyoxazolan ist, erhalten durch Reaktion eines Mono-oxazolans gemäß der allgemeinen Formel (V) durch Wasserstoff auf dessen Stickstoffatom mit einem polyfunktionellen Reagens aus der Reihe eines Polyisocyanats, eines Polyepoxids, einer Polycarbonsäure, einer teilweise veresterten Polycarbonsäure oder eines Polysäureanhydrids.

**8.** Verfahren nach Anspruch 7, dadurch gekennzeichnet, daß das polyfunktionelle Reagens ein aliphatisches, cycloaliphatisches, araliphatisches, aromatisches oder heterocyclisches Polyisocyanat ist.

**9.** Verfahren nach irgendeinem der vorhergehenden Ansprüche, dadurch gekennzeichnet, daß das Gewichtsverhältnis von Leuchtstoff zu Bindemittel im Bereich von 100/1 bis 1/1 liegt.

**10.** Lumineszierender Artikel, welcher eine auf einen Träger angebrachte oder selbsttragende Schicht aus in einem gehärteten Harzbindemittel dispergierten Leuchtstoff-Partikeln enthält, dadurch gekennzeichnet, daß das Bindemittel eine durch Feuchtigkeit gehärtete Bindemittelzusammenstellung ist, dadurch erhalten, daß man Wasser in Kontakt kommen läßt mit einem Gemisch, das hauptsächlich aus den folgenden Komponenten (A) und (B) besteht:

(A) 30 bis 99 Gewichtsteile von wenigstens einem Copolymeren aus olefinisch ungesättigten Verbindungen, das ein gewichtsdurchschnittliches Molekulargewicht [Mw] von mindestens 1500 hat und chemisch einverleibte Anteile enthält, die zu einer Additionsreaktion mit Aminogruppen befähigt sind, und

(B) 1 bis 70 Gewichtsteile von blockierte Aminogruppen enthaltenden organischen Substanzen, aus denen sich Stoffe bilden unter dem Einfluß von Feuchtigkeitsverbindungen, die freie, primäre und/oder sekundäre Aminogruppen aufweisen, und

dadurch, daß i) die Copolymeren der Komponente (A) intramolekular gebundene Carbonsäureanhydrid-Anteile enthalten, wobei das Anhydrid-Äquivalentgewicht der Copolymeren zwischen 393 und 9800 liegt und ii) die Bindemittelzusammenstellung 0,25 bis 10 Anhydrid-Anteile je blockierte Aminogruppe enthält.

**11.** Lumineszierender Artikel nach Anspruch 10, dadurch gekennzeichnet, daß die Komponente (A) sich hauptsächlich zusammensetzt aus einem Copolymeren von:

a) 3 bis 25 Gewichtsteilen Maleinsäureanhydrid und

b) 75 bis 97 Gewichtsteilen von wenigstens einem copolymerisierbaren Monomeren entsprechend einer der folgenden allgemeinen Formeln (I), (II) und (III) :

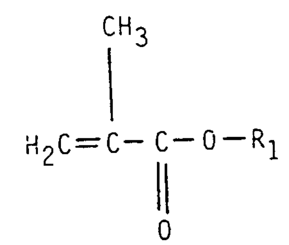

(I)

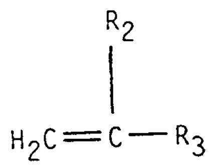

(II)

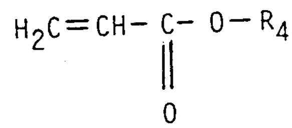

(III)

in denen bedeuten:

$R_1$ und $R_4$ unabhängig voneinander eine aliphatische oder cycloaliphatische $C_1$ - $C_{18}$ Kohlenwasserstoffgruppe, in der ein oder mehrere Kohlenstoffatome durch ein Sauerstoff-, Schwefel- oder Stickstoffatom ersetzt sein kann,

$R_2$ Wasserstoff, Methyl, Ethyl, Chlor oder Fluor, und

$R_3$ eine $C_2$ - $C_{15}$ aliphatische Kohlenwasserstoffgruppe, eine $C_5$ - $C_{10}$ cycloaliphatische Kohlenwasserstoffgruppe, eine $C_7$ - $C_{18}$ araliphatische Kohlenwasserstoffgruppe, eine $C_6$ - $C_{12}$ aromatische Kohlenwasserstoffgruppe, die eine oder mehrere Sauerstoff-, Schwefel- oder Stickstoffatome in der Form einer Ether-, Ester-, Amid-, Urethan-, Thioharnstoff-, Thioester-, Oxiran-, Keton-, Lactam- oder Lactongruppe enthält; und

dadurch, daß Komponente (B) ein Aldimin, Ketimin, Oxazolan, Hexahydropyrimidin, Tetrahydroimidazol, Dihydroimidazol, Tetrahydropyrimidin, Amidacetal oder Amidaminal ist.

**12.** Lumineszierender Artikel nach Anspruch 11, dadurch gekennzeichnet, daß die Maleinsäureanhydrid-Copolymeren (A) ein durch Gelchromatografie bestimmtes gewichtsdurchschnittliches Molekulargewicht [Mw] von 3000 bis 50 000 haben und ihr Anhydrid-Äquivalentgewichtzwischen 3800 und 393 liegt.

**13.** Lumineszierender Artikel nach Anspruch 11 oder 12, dadurch gekennzeichnet, daß die Maleinsäureanhydrid-Copolymeren (A) Styrol-, Methacrylat- und/oder Acrylat-Einheiten enthalten.

**14.** Lumineszierender Artikel nach irgendeinem der Ansprüche 10-13, dadurch gekennzeichnet, daß die Komponente (B) ein statistisches Mittel von 1 bis 50 Struktureinheiten entsprechend mindestens einer der folgenden allgemeinen Formeln (IV), (V), (VI), (VII), (VIII) und (IX) enthält:

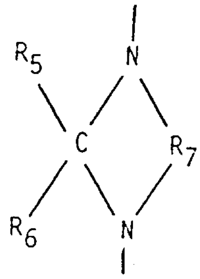

(IV)

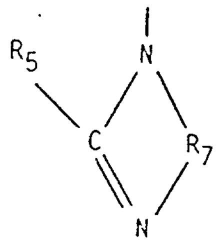

(V)

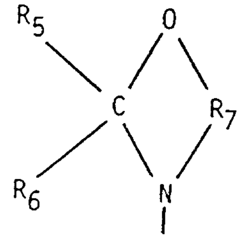

(VI)

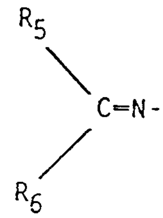

(VII)

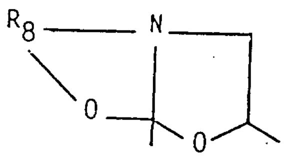

(VIII)

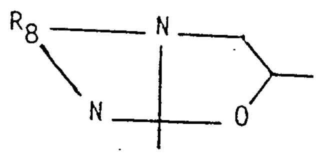

(IX)

in denen bedeuten:

$R_5$ und $R_6$ unabhängig voneinander je Wasserstoff, eine aliphatische $C_1$ - $C_{18}$-Kohlenwasserstoffgruppe, eine cycloaliphatische $C_5$ - $C_{10}$ -Kohlenwasserstoffgruppe, eine araliphatische $C_7$ - $C_{18}$ -Kohlenwasserstoffgruppe oder eine Phenylgruppe, oder

$R_5$ und $R_6$ zusammen die erforderlichen Atome zur Bildung eines 5- oder 6-gliedrigen cycloaliphatischen Ringes mit dem Kohlenstoffatom, an den sie üblicherweise gebunden sind,

$R_7$ eine divalente aliphatische $C_2$ - $C_6$ -Kohlenwasserstoffgruppe, die jedoch eine Kette von nur 2 bis 3 Kohlenstoffatomen zwischen den angegebenen Heteroatomen des Ringes aufweist,

$R_8$ eine divalente aliphatische $C_2$ - $C_{10}$ -Kohlenwasserstoffgruppe, die jedoch nur 2 oder 3 Kohlenstoffatome zwischen den Heteroatomen aufweist, an die diese Gruppe gebunden ist.

**15.** Lumineszierender Artikel nach Anspruch 14, dadurch gekennzeichnet, daß die blockierten Amine einen Molekulargewicht zwischen 86 und 10 000 besitzen.

**16.** Lumineszierender Artikel nach irgendeinem der Ansprüche 14 und 15, dadurch gekennzeichnet, daß Komponente (B) ein Polyoxazolan ist, erhalten durch Reaktion eines Mono-oxezolans gemäß der allgemeinen Formel (V) durch Wasserstoff auf dessen Stickstoffatom mit einem polyfunktionellen Reagens aus der Reihe eines Polyisocyanats, eines Polyepoxids, einer Polycarbonsäure, einer teilweise veresterten Polycarbonsäure oder eines Polysäureanhydrids.

**17.** Lumineszierender Artikel nach Anspruch 16, dadurch gekennzeichnet, daß das polyfunktionelle Reagens ein aliphatisches, cycloaliphatisches, araliphatisches, aromatisches oder heterocyclisches Polyisocyanat ist.

**18.** Lumineszierender Artikel nach irgendeinem der Ansprüche 10-17, dadurch gekennzeichnet, daß das Gewichtsverhältnis von Leuchtstoff zu Bindemittel im Bereich von 100/1 bis 1/1 liegt.

## Revendications

**1.** Une méthode pour la production d'un article luminescent comprenant une couche supportée ou indépendante de luminophore et de liant contenant un liant durci par voie chimique, laquelle méthode comprend les étapes (1) d'appliquer une dispersion de particules de luminophore dans une solution de liant non durci dans un solvant ou dans un mélange de solvants sur un support temporaire ou

permanent, (2) d'éliminer le(s) solvant(s) par évaporation, et (3) de durcir le liant à l'aide d'humidité ($H_2O$), caractérisée en ce que le liant est formé substantiellement à partir d'une composition de liant se durcissant par l'humidité, préparée en mélangeant les composants (A) et (B) suivants:

(A) 30 à 99 parties en poids d'au moins un copolymère de composés à insaturation oléfinique ayant un poids moléculaire moyen en poids [Mw] d'au moins 1500 et contenant des fractions incorporées par voie chimique capables de subir une réaction d'addition avec des groupes amino, et

(B) 1 à 70 parties en poids de substances organiques contenant des groupes amino bloqués, à partir desquelles, sous l'influence de composés d'humidité, se forment des substances ayant des groupes amino primaires et/ou secondaires libres, et

en ce que i) les copolymères du composant (A) contiennent des fractions d'anhydrides carboxyliques liées de façon intramoléculaire, le poids équivalent des anhydrides des copolymères se situant entre 393 et 9.800 et ii) la composition de liant contient de 0,25 à 10 de fractions d'anhydride par groupe amino bloqué.

**2.** Une méthode selon la revendication 1, caractérisée en ce que le composant (A) consiste essentiellement en un copolymère de:

a) 3 à 25 parties en poids d'anhydride maléique, et de

b) 75 à 97 parties en poids d'au moins un monomère copolymérisable correspondant à une des formules générales suivantes (I), (II) et (III) :

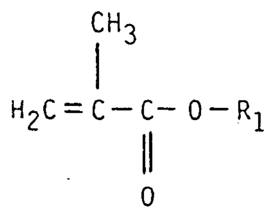
(I)

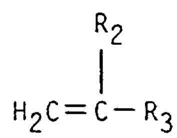
(II)

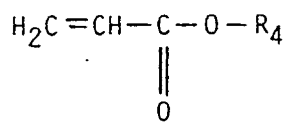
(III)

dans lesquelles:

$R_1$ et $R_4$, indépendamment l'un de l'autre, représentent chacun un groupe hydrocarbure aliphatique ou cycloaliphatique en $C_1$ - $C_{18}$, où un ou plusieurs des atomes de carbone peuvent être remplacés par des atomes d'oxygène, de soufre ou d'azote,

$R_2$ représente hydrogène, méthyle, éthyle, chlore ou fluor, et

$R_3$ représente un groupe hydrocarbure aliphatique en $C_2$ - $C_{15}$, un groupe hydrocarbure cycloaliphatique en $C_5$ - $C_{10}$, un groupe hydrocarbure araliphatique en $C_7$ - $C_{18}$, un groupe hydrocarbure aromatique en $C_6$ - $C_{12}$ contenant un ou plusieurs atomes d'oxygène de soufre ou d'azote sous forme d'un groupe d'éther, d'ester, d'amide, d'urethane, d'urée, de thioester, d'oxirane, de cétone, de lactame ou de lactone; et

en ce que le composant (B) est une aldimine, une cétimine, une oxazolane, une hexahydropyrimidine, un tétrahydroïmidazole, un dihydroïmidazole, une tétrahydropyrimidine, un amidacetal ou un amidaminal.

**3.** Une méthode selon la revendication 2, caractérisée en ce que les copolymères d'anhydride maléique (A) possèdent un poids moléculaire moyen en poids [Mw] déterminé par chromatographie du gel de 3.000 à 50.000, et en ce que leur poids équivalent d'anhydride (= quantité, exprimée en grammes, contenant 1 mole de groupes anhydride) se situe entre 3.800 et 393.

**4.** Une méthode selon la revendication 2 ou 3, caractérisée en ce que les copolymères de l'anhydride maléique (A) contiennent des unités de styrène, de méthacrylate et/ou d'acrylate.

**5.** Une méthode selon l'une quelconque des revendications 1 à 4, caractérisée en ce que le composant (B) contient une moyenne statistique de 1 à 50 d'unités structurales correspondant à au moins une des formules générales suivantes (IV), (V), (VI), (VII), (VIII) et (IX):

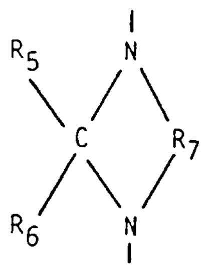

(IV)

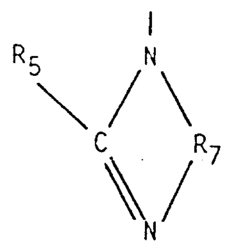

(V)

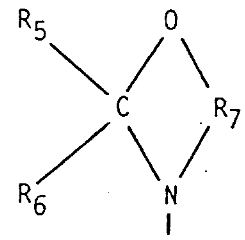

(VI)

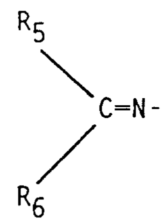

(VII)

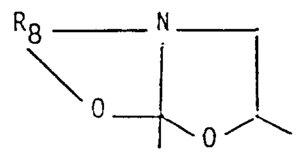

(VIII)

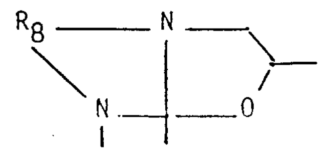

(IX)

dans lesquelles :

$R_5$ et $R_6$, indépendamment l'un de l'autre, représentent chacun l'hydrogène, un groupe hydrocarbure aliphatique ou cycloaliphatique en $C_1$ - $C_{18}$, un groupe hydrocarbure cycloaliphatique en $C_5$ - $C_{10}$, un groupe hydrocarbure aliphatique en $C_7$ - $C_{18}$ ou un groupe phényle, ou

$R_5$ et $R_6$ représentent ensemble les atomes nécessaires pour former un noyau cycloaliphatique pentagonal ou hexagonal avec l'atome de carbone auquel ils sont liés communément,

$R_7$ représente un groupe hydrocarbure aliphatique bivalent en $C_2$ - $C_6$, mais ne contenant qu'une chaîne de 2 ou 3 atomes de carbone entre les hétéroatomes définis du noyau,

$R_8$ représente un groupe hydrocarbure aliphatique bivalent en $C_2$ - $C_{10}$, mais ne contenant qu'une chaîne de 2 ou 3 atomes de carbone entre les hétéroatomes auxquels ce groupe est lié.

**6.** Une méthode selon la revendication 5, caractérisée en ce que les amines bloquées ont un poids moléculaire de 86 à 10 000.

**7.** Une méthode selon l'une quelconque des revendications 5 ou 6, caractérisée en ce que le composant (B) est une polyoxazolane obtenue en faisant réagir une mono-oxazolane suivant la formule générale (V) par l'hydrogène sur son atome d'azote avec un réactif polyfonctionnel choisi parmi un polyisocyanate, un polyépoxyde, un acide polycarboxylique et un acide polycarboxylique ou un anhydride d'un polyacide partiellement estérifié.

**8.** Une méthode selon la revendication 7, caractérisée en ce que le réactif polyfonctionnel est un polyisocyanate aliphatique, cycloaliphatique, araliphatique, aromatique ou hétérocyclique.

**9.** Une méthode selon l'une quelconque des revendications précédentes, caractérisée en ce que le rapport pondéral du luminophore au liant se situe dans le domaine de 100:1 à 1:1.

**10.** Un article luminescent comprenant une couche supportée ou indépendante de particules de luminophore dispersées dans un liant résineux durci, caractérisé en ce que le liant est une composition de liant durcie par l'humidité ayant été obtenue en laissant entrer l'eau en contact avec un mélange consistant essentiellement en les composants (A) et (B) suivants:

(A) 30 à 99 parties en poids d'au moins un copolymère de composés à insaturation oléfinique ayant un poids moléculaire moyen en poids [Mw] d'au moins 1500 et contenant des fractions incorporées par voie chimique capables de subir une réaction d'addition avec des groupes amino, et

(B) 1 à 70 parties en poids de substances organiques contenant des groupes amino bloqués, à partir desquelles, sous l'influence de composés d'humidité, se forment des substances ayant des

groupes amino primaires et/ou secondaires libres, et
en ce que i) les copolymères du composant (A) contiennent des fractions d'anhydrides carboxyliques liées de façon intramoléculaire, le poids équivalent des anhydrides des copolymères se situant entre 393 et 9.800 et ii) la composition de liant contient de 0,25 à 10 de fractions d'anhydride par groupe amino bloqué.

**11.** Un article luminescent selon la revendication 10, caractérisée en ce que le composant (A) consiste essentiellement en un copolymère de:
a) 3 à 25 parties en poids d'anhydride maléique, et de
b) 75 à 97 parties en poids d'au moins un monomère copolymérisable correspondant à une des formules générales suivantes (I), (II) et (III) :

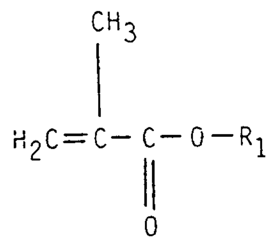
(I)

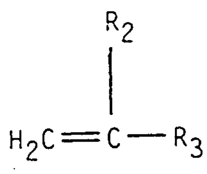
(II)

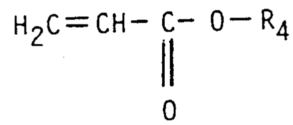
(III)

dans lesquelles:
$R_1$ et $R_4$, indépendamment l'un de l'autre, représentent chacun un groupe hydrocarbure aliphatique ou cycloaliphatique en $C_1$ - $C_{18}$, où un ou plusieurs des atomes de carbone peuvent être remplacés par des atomes d'oxygène, de soufre ou d'azote,
$R_2$ représente hydrogène, méthyle, éthyle, chlore ou fluor, et
$R_3$ représente un groupe hydrocarbure aliphatique en $C_2$ - $C_{15}$, un groupe hydrocarbure cycloaliphatique en $C_5$ - $C_{10}$, un groupe hydrocarbure araliphatique en $C_7$ - $C_{18}$, un groupe hydrocarbure aromatique en $C_6$ - $C_{12}$ contenant un ou plusieurs atomes d'oxygène, de soufre ou d'azote sous forme d'un groupe d'éther, d'ester, d'amide, d'urethane, d'urée, de thioester, d'oxirane, de cétone, de lactame ou de lactone; et en ce que le composant (B) est une aldimine, une cétimine, une oxazolane, une hexahydropyrimidine, un tétrahydroïmidazole, un dihydroïmidazole, une tétrahydropyrimidine, un amidacetal ou un amidaminal.

**12.** Un article luminescent selon la revendication 11, caractérisé en ce que les copolymères d'anhydride maléique (A) possèdent un poids moléculaire moyen en poids [Mw] déterminé par chromatographie du gel de 3.000 à 50.000, et que leur poids équivalent d'anhydride se situe entre 3.800 et 393.

**13.** Un article luminescent selon la revendication 11 ou 12, caractérisé en ce que les copolymères d'anhydride maléique (A) contiennent des unités de styrène, de méthacrylate et/ou d'acrylate.

**14.** Un article luminescent selon l'une quelconque des revendications 10 à 13, caractérisé en ce que le composaent (B) contient une moyenne statistique de 1 à 50 unités structurales correspondant à au moins une des formules générales suivantes (IV), (V), (VI), (VII), (VIII) ou (IX):

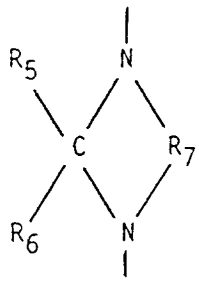

(IV)

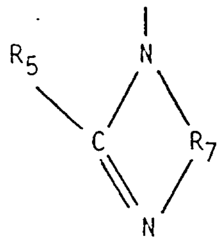

(V)

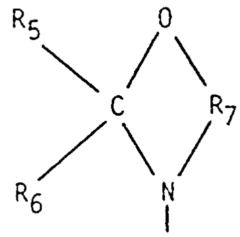

(VI)

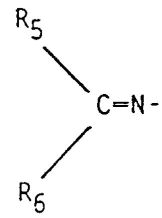

(VII)

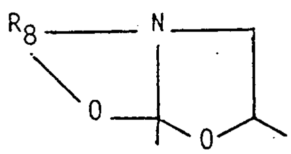

(VIII)

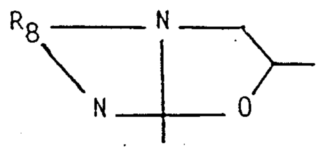

(IX)

dans lesquelles :

$R_5$ et $R_6$, indépendamment l'un de l'autre, représentent chacun l'hydrogène, un groupe hydrocarbure aliphatique ou cycloaliphatique en $C_1$ - $C_{18}$, un groupe hydrocarbure cycloaliphatique en $C_5$ - $C_{10}$, un groupe hydrocarbure araliphatique en $C_7$ - $C_{18}$ ou un groupe phényle, ou

$R_5$ et $R_6$ représentent ensemble les atomes nécessaires pour former un noyau cycloaliphatique pentagonal ou hexagonal avec l'atome de carbone auquel ils sont liés communément,

$R_7$ représente un groupe hydrocarbure aliphatique bivalent en $C_1$ - $C_{18}$, mais ne contenant qu'une chaîne de 2 ou 3 atomes de carbone entre les hétéroatomes définis du noyau,

$R_8$ représente un groupe hydrocarbure aliphatique bivalent en $C_2$ - $C_{10}$, mais ne contenant qu'une chaîne de 2 ou 3 atomes de carbone entre les hétéroatomes auxquels ce groupe est lié.

**15.** Un article luminescent selon la revendication 14, caractérisé en ce que les amines bloquées ont un poids moléculaire de 86 à 10.000.

**16.** Un article luminescent selon l'une quelconque des revendications 14 ou 15, caractérisé en ce que le composant (B) est une polyoxazolane obtenue en laissant réagir une mono-oxazolane suivant la formule générale (V) par l'hydrogène sur son atome d'azote avec un réactif polyfonctionnel choisi parmi un polyisocyanate, un polyépoxyde, un acide polycarboxylique et un acide polycarboxylique ou un anhydride d'un polyacide partiellement estérifié.

**17.** Un article luminescent selon la revendication 16, caractérisé en ce que le réactif polyfonctionnel est un polyisocyanate aliphatique, cycloaliphatique, araliphatique, aromatique ou hétérocyclique.

**18.** Un article luminescent selon l'une quelconque des revendications 10 à 17, caractérisé en ce que le rapport pondéral du luminophore au liant se situe dans le domaine de 100:1 à 1:1.